# EUROPÄISCHE PATENTSCHRIFT

(11) **EP 1 362 081 B1**
(45) Veröffentlichungstag und Bekanntmachung des Hinweises auf die Patenterteilung: **16.03.2005**
(21) Anmeldenummer: 02703590.6
(22) Anmeldetag: 31.01.2002
(51) Int. Cl.: C09B 67/22, C09B 67/20

(54) **SAURE PIGMENTDISPERGATOREN UND PIGMENTZUBEREITUNGEN**
ACID PIGMENT DISPERSANTS AND PIGMENT PREPARATIONS
AGENTS DISPERSANTS PIGMENTAIRES ACIDES ET PREPARATIONS PIGMENTAIRES

(30) Priorität: 10.02.2001 DE 10106147
(43) Veröffentlichungstag der Anmeldung: 19.11.2003
(73) Patentinhaber: Clariant GmbH, 65929 Frankfurt am Main (DE)
(72) Erfinder: WEBER, Joachim, 65929 Frankfurt am Main (DE); WILKER, Gerhard, 64546 Mörfelden-Walldorf (DE); BRYCHCY, Klaus, 60488 Frankfurt am Main (DE); DIETZ, Erwin, 61462 Königstein (DE)
(74) Vertreter: Hütter, Klaus, Dr.
(86) Internationale Anmeldenummer: PCT/EP2002/000979
(87) Internationale Veröffentlichungsnummer: WO 2002/064680

(56) Entgegenhaltungen:
- EP-A- 0 224 445
- EP-A- 0 636 666
- EP-A- 0 649 881
- EP-A- 1 026 207
- WO-A-91/02034
- GB-A- 2 025 954
- GB-A- 2 071 683
- PATENT ABSTRACTS OF JAPAN vol. 006, no. 239 (C-137), 26. November 1982 (1982-11-26) -& JP 57 141456 A (TOYO INK SEIZO KK), 1. September 1982 (1982-09-01)
- PATENT ABSTRACTS OF JAPAN vol. 015, no. 145 (C-0823), 12. April 1991 (1991-04-12) & JP 03 026767 A (TOYO INK MFG CO LTD), 5. Februar 1991 (1991-02-05)

## Beschreibung

Die vorliegende Erfindung betrifft neue Pigmentdispergatoren und neue Pigmentzubereitungen mit verbesserten coloristischen und rheologischen Eigenschaften sowie deren Herstellung und Verwendung zum Pigmentieren von hochmolekularen Materialien.

Pigmentzubereitungen sind Kombinationen von Pigmenten und pigmentären Dispergiermitteln, letztere werden im folgenden Pigmentdispergatoren genannt. Diese Pigmentdispergatoren sind strukturell zu Pigmenten analog und werden beispielsweise aus Substanzen mit pigmentärem Charakter, vorzugsweise aus den organischen Pigmenten selbst, durch Substitution mit spezifisch wirksamen Gruppen hergestellt. Die Pigmentdispergatoren werden den Pigmenten zugesetzt, um die Dispergierung in den Anwendungsmedien, insbesondere in Lacken, zu erleichtern und um die rheologischen und coloristischen Eigenschaften der Pigmente zu verbessern. Die Viskosität der hochpigmentierten Lackkonzentrate (Millbase) wird erniedrigt und die Flockung der Pigmentteilchen vermindert. Dadurch kann beispielsweise die Transparenz und der Glanz erhöht werden. Dies ist insbesondere bei Metallicpigmenten erwünscht.

Es gibt eine Vielzahl von Vorschlägen zur Verbesserung der rheologischen und coloristischen Eigenschaften von organischen Pigmenten durch Zusatz von pigmentären oder nichtpigmentären Hilfsmitteln, die jedoch nicht immer zum erhofften Resultat führen.

Die JP 08 029 777 und die JP 01 088 505 offenbaren in Wasser lösliche Farbstoffe mit Carboxylgruppen auf Basis von Zn-Phthalocyaninen, die JP 62 253 662, JP 01 190 770, EP 649 881 und EP 719 847 offenbaren in Wasser lösliche Farbstoffe mit Carboxylgruppen auf Basis von Cu-Phthalocyaninen. Die GB 1 429 177, die DE 29 16 484, die EP 39 306 und die JP 57 059 969 offenbaren in Wasser lösliche Azofarbstoffe mit Carboxylgruppen. Farbstoffe sind im Anwendungsmedium lösliche Farbmittel und tragen daher entsprechend löslichmachende Gruppen; im Gegensatz zu Pigmenten, die im Anwendungsmedium nicht löslich sind. In Wasser lösliche Farbstoffe eignen sich beispielsweise nicht zum Pigmentieren von Lacksystemen auf wässriger Basis, da sie ungenügende Echtheiten wie Lösemittel- oder Übertackierechtheiten zeigen.

Die GB 2 025 954 und die EP 147 364 offenbaren wasserlösliche Substanzen mit Carboxylgruppen auf Basis Anthrachinon für die Abwasserbehandlung, die JP 58-52360 offenbart von Anthrachinon abgeleitete Verbindungen mit Carboxyl-Gruppen.

In der EP 636 666 werden Pigmentzubereitungen aus einem organischen Pigment und einem speziellen Säuregruppenhaltigen Perylenderivat als Dispergator offenbart.

In US 5 698 618 werden Pigmentdispergatoren mit freien Sulfonsäuregruppen beschrieben. Die EP 1 026 207 offenbart Pigmentdispergatoren mit freien Sulfonsäure- oder Carboxylgruppen. In EP-A-224 445 werden Pigmentdispergatoren mit Sulfonsäure- oder Carboxylgruppen beschrieben. Die mit diesen Pigmentdispergatoren hergestellten Pigmentzubereitungen erfüllen jedoch nicht alle Anforderungen hinsichtlich der anwendungstechnischen Eigenschaften, die an Pigmentzubereitungen gestellt werden.

Es bestand ein Verbesserungsbedarf und daher die Aufgabe, Pigmentdispergatoren zu finden, die für die verschiedenen Pigmentklassen einfach zugänglich sind, universell bei den verschiedenen Pigmentklassen anwendbar sind, und durch deren Einsatz man neue Pigmentzubereitungen zur Verfügung stellen kann, die im Vergleich zum Stand der Technik überlegene Eigenschaften haben.

Es wurde gefunden, dass die Aufgabe überraschenderweise durch nachstehend definierte carboxylgruppenhaltige Pigmentdispergatoren gelöst wird.

Gegenstand der Erfindung sind Pigmentdispergatoren der allgemeinen Formel (I), 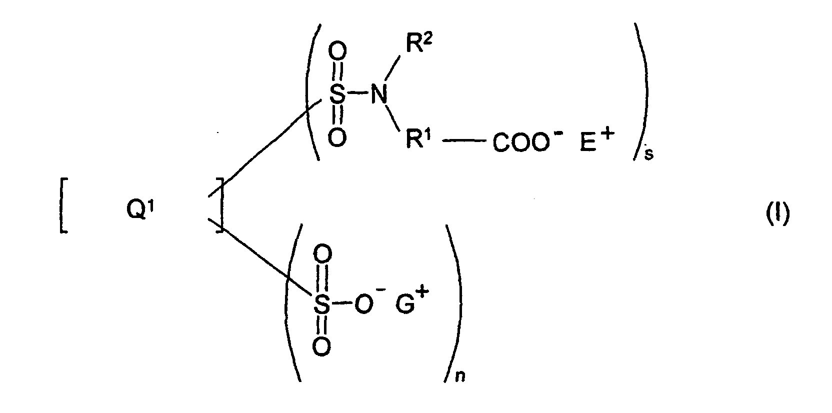 worin
- Q¹: ein Rest eines organischen Pigments aus der Gruppe der Perinon-, Chinacridon-, Chinacridonchinon-, Anthanthron-, Indanthron-, Dioxazin-, wie beispielsweise Triphendioxazine, Diketopyrrolopyrrol-, Indigo-, Thioindigo-, Thiazinindigo-, Isoindolin-, Isoindolinon-, Pyranthron-, Isoviolanthron-, Flavanthron- oder Anthrapyrimidin-Pigmente ist;
- s: eine Zahl von 1 bis 5 darstellt;
- n: eine Zahl von 0 bis 4 darstellt;
wobei die Summe von s und n 1 bis 5 beträgt;
- R¹: einen bivalenten verzweigten oder unverzweigten, gesättigten oder ungesättigten, aliphatischen Kohlenwasserstoffrest mit 1 bis 20 C-Atomen, oder einen C₅-C₇-Cycloalkylenrest, oder einen bivalenten aromatischen Rest mit 1, 2 oder 3, vorzugsweise 1 oder 2 aromatischen Ringen, wobei die Ringe kondensiert vorliegen oder durch eine Bindung verknüpft sein können, wie beispielsweise ein Phenyl-, Biphenyl- oder Naphthylrest, oder einen heterocyclischen Rest mit 1, 2 oder 3 Ringen, der 1, 2, 3 oder 4 Heteroatome aus der Gruppe O, N und S enthält, oder eine Kombination davon bedeutet; wobei die vorstehend genannten Kohlenwasserstoff-, Cycloalkylen-, Aromaten- und Heteroaromaten-Reste durch 1, 2, 3 oder 4 Substituenten aus der Gruppe OH, CN, F, Cl, Br, NO₂, CF₃, C₁-C₆-Alkoxy, S-C₁-C₆-Alkyl, NHCONH₂, NHC(NH)NH₂, NHCO-C₁-C₆-Alkyl, C₁-C₆-Alkyl, COOR²⁰, CONR²⁰R²¹, NR²⁰R²¹, SO₃R²⁰ oder SO₂-NR²⁰R²¹ substituiert sein können, wobei R²⁰ und R²¹ gleich oder verschieden sind und Wasserstoff, Phenyl oder C₁-C₆-Alkyl bedeuten;
- R²: Wasserstoff, HR¹ oder R¹-COO⁻E⁺ bedeutet;
- E⁺ und G⁺: unabhängig voneinander H⁺ oder das Äquivalent M^{m+}/m eines Metallkations M^{m+} aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 ist, wie beispielsweise Li¹⁺, Na¹⁺, K¹⁺, Mg²⁺, Ca²⁺, Sr²⁺, Ba²⁺, Mn²⁺, Cu²⁺, Ni²⁺, Co²⁺, Zn²⁺, Fe²⁺, Al³⁺, Cr³⁺ oder Fe³⁺; ein Ammoniumion N⁺R⁹R¹⁰R¹¹R¹²,
- wobei die Substituenten R⁹, R¹⁰, R¹¹ und R¹²: unabhängig voneinander jeweils ein Wasserstoffatom, C₁-C₃₀-Alkyl, C₂-C₃₀-Alkenyl, C₅-C₃₀-Cycloalkyl, Phenyl, (C₁-C₈)-Alkyl-phenyl, (C₁-C₄)-Alkylen-phenyl, beispielsweise Benzyl, oder eine (Poly)alkylenoxy-gruppe der Formel -[CH(R⁸⁰)-CH(R⁸⁰)-O]ₖ-H sind, in der k eine Zahl von 1 bis 30 ist und die beiden Reste R⁸⁰ unabhängig voneinander Wasserstoff, C₁-C₄-Alkyl oder, sofern k > 1 ist, eine Kombination davon bedeuten;
- und worin als R⁹, R¹⁰, R¹¹ und/oder R¹²: ausgewiesenes Alkyl, Alkenyl, Cyclophenyl, Phenyl oder Alkylphenyl durch Amino, Hydroxy, und/oder Carboxy substituiert sein können;
- oder wobei die Substituenten R⁹ und R¹⁰: zusammen mit dem quartären N-Atom ein fünf- bis siebengliedriges gesättigtes Ringsystem, das ggf. noch weitere Heteroatome aus der Gruppe O, S und N enthält, bilden können, beispielsweise vom Pyrrolidon-, lmidazolidin-, Hexamethylenimin-, Piperidin-, Piperazin- oder Morpholin-Typ;
oder wobei die Substituenten R⁹, R¹⁰ und R¹¹ zusammen mit dem quartären N-Atom ein fünf- bis siebengliedriges aromatisches Ringsystem, das ggf. noch weitere Heteroatome aus der Gruppe O, S und N enthält und an dem ggf. zusätzliche Ringe ankondensiert sind, bilden können, beispielsweise vom Pyrrol-, Imidazol-, Pyridin-, Picolin-, Pyrazin-, Chinolin- oder Isochinolin-Typ;
oder worin E⁺ und/oder G⁺ ein Ammoniumion der Formel (Ia) bedeutet, 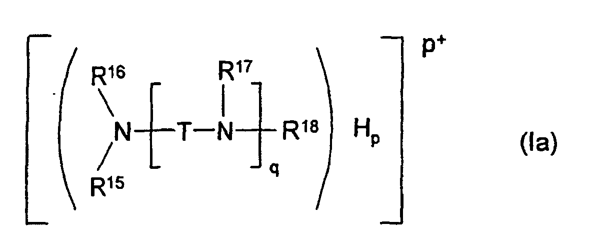 worin
- R¹⁵, R¹⁶, R¹⁷ und R¹⁸: unabhängig voneinander Wasserstoff oder eine (Poly)alkylenoxygruppe der Formel -[CH(R⁸⁰)-CH(R⁸⁰)O]ₖ-H bedeuten, in der k eine Zahl von 1 bis 30 ist und die beiden Reste R⁸⁰ unabhängig voneinander Wasserstoff, C₁-C₄-Alkyl oder, sofern k > 1 ist, eine Kombination davon bedeuten;
- q: eine Zahl von 1 bis 10, vorzugsweise 1, 2, 3, 4 oder 5 ist;
- p: eine Zahl von 1 bis 5, wobei p ≤ q+1 ist;
- T: einen verzweigten oder unverzweigten C₂-C₆-Alkylenrest bedeutet; oder worin T, wenn q > 1 ist, auch eine Kombination von verzweigten oder unverzweigten C₂-C₆-Alkylenresten sein kann.

Bevorzugte Reste Q¹ eines organischen Pigments im Sinne der vorliegenden Erfindung sind beispielsweise C.I. Pigment Yellow 108, 109, 110, 138, 139, 173, 185; Pigment Orange 42, 43, 48, 49, 61, 71, 73; Pigment Red 88, 122, 168, 192, 194, 202, 206, 207, 209, 254, 255, 264, 272; Pigment Violet 19, 23, 37.

Von besonderem Interesse sind Pigmentdispergatoren der Formel (I) mit s = 1 bis 3, n = 0 bis 2 und der Summe aus s und n von 1 bis 3. Insbesondere sind Pigmentdispergatoren der Formel (I) mit s = 1 bis 2,5, n = 0 bis 1 und der Summe aus s und n von 1 bis 2,5 von Interesse.

Von besonderem Interesse sind weiterhin Pigmentdispergatoren der Formel (I), worin R¹ eine verzweigte oder unverzweigte C₁-C₁₀-Alkylen-Gruppe, insbesondere Ethylen, Propylen oder Butylen, oder ein Phenylenrest ist.
Von besonderem Interesse sind weiterhin Pigmentdispergatoren der Formel (I), worin R² Wasserstoff oder C₁-C₆-Alkyl, insbesondere H, Methyl oder Ethyl, bedeutet.

Von besonderen Interesse sind weiterhin Pigmentdispergatoren der Formel (I), bei denen E⁺ und G⁺ die Bedeutung H⁺ oder Na⁺ haben, oder wobei im Falle des Äquivalents M^{m+}/m das Metallkation M^{m+} die Bedeutung Ca²⁺, Sr²⁺, Ba²⁺ oder Al³⁺ hat.

Die erfindungsgemäßen Pigmentdispergatoren lassen sich durch Chlorsulfonierung von organischen Pigmenten aus der Gruppe der Perinon-, Chinacridon-, Chinacridonchinon-, Anthanthron-, Indanthron-, Dioxazin-, wie beispielsweise Triphendioxazine, Diketopyrrolopyrrol-, Indigo-, Thioindigo-, Thiazinindigo-, Isoindolin-, Isoindolinon-, Pyranthron-, Isoviolanthron-, Flavanthron- oder Anthrapyrimidin-Pigmente, Umsetzung des Sulfochlorids mit einer Aminocarbonsäure der Formel (V), 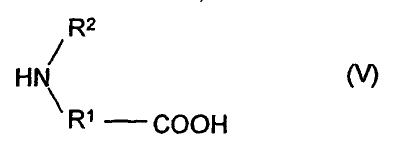 worin R¹ und R² die oben genannte Bedeutung haben, und gegebenenfalls Umsetzung oder Verlackung der freien Säure mit einem G⁺ oder E⁺ zugrundeliegenden Metallsalz oder Ammoniumsalz herstellen.

Als Aminocarbonsäuren der allgemeinen Formel (V) können beispielsweise α-, β-, γ-, δ-, ε-Aminocarbonsäuren, wie Glycin, Methylglycin, Sarkosin, Aminopropionsäuren, wie α- und β-Alanin oder 3-Amino-3-phenylpropionsäure, Valin, Leucin, Isoleucine, Cycloleucin, Tryptophan, Histidin, Serin, Isoserin, Threonin, Methionin, Ornithin, Arginin, Citrullin, Lysin, Asparagin, Asparaginsäure, Glutamin, Glutaminsäure, Phenylalanin und substituierte Phenylalanine, wie Tyrosin oder Dopa, Prolin, 1-Aminocyclohexancarbonsäure, Aminobuttersäuren, wie 1,3-Diaminobuttersäure, Aminovaleriansäuren, 5-Aminolävulinsäure, Aminocapronsäuren, 2-Aminoadipinsäure, 2,6-Diaminopimelinsäure, Aminocaprylsäure, substituierte oder unsubstituierte Aminobenzoesäuren, wie m- oder p-Aminobenzoesäure, p-Aminosalicylsäure, Aminoisophthalsäure oder Aminoterephthalsäure, eingesetzt werden.

Die Chlorsulfonierung wird zweckmäßigerweise so durchgeführt, dass Chlorsulfonsäure im 4 bis 40-fachen Gewichtsüberschuss, bezogen auf das Pigment, eingesetzt und vorzugsweise zusätzlich noch eine 1 bis 20-fache, bevorzugt 1 bis 10-fache, molare Menge, bezogen auf das Pigment, an Thionylchlorid eingesetzt wird. Die Chlorsulfonierung wird vorzugsweise bei einer Temperatur von -10 bis 200°C, insbesondere bei 0 bis 150°C, gegebenenfalls unter Druck, durchgeführt. Das Pigment-Sulfochlorid wird zweckmäßigerweise in Wasser gefällt und isoliert.
Die Umsetzung des Sulfochlorids mit der Aminocarbonsäure geschieht bei einer Temperatur von -15 bis 100°C, insbesondere bei -5 bis 80°C, und vorzugsweise in wässrigem Medium. Die molaren Mengen von Aminocarbonsäure zu Sulfochlorid betragen zweckmäßigerweise (0,5 bis 15) zu 1, bevorzugt (0,5 bis 10) zu 1, insbesondere (1 bis 5) zu 1. Bevorzugt wird die Aminocarbonsäure in Wasser vorgelegt und das Sulfochlorid zugegeben. Es ist vorteilhaft, die vorgelegte Aminocarbonsäure mit einer Base vor Zugabe des Sulfochlorids zu neutralisieren, so dass die Aminocarbonsäure als Aminocarboxylat vorliegt. Zweckmäßigerweise verwendet man dafür einen leichten molaren Überschuss an Base bezogen auf Aminocarbonsäure. Die Aminocarbonsäure und die Base dienen auch zum Neutralisieren der freiwerdenden Salzsäure, so dass auch eine größere Menge Base gewählt werden kann. Des weiteren kann durch die Variation der relativen Menge der Aminocarbonsäure zu Sulfochlorid, durch die Anwesenheit und Menge der Base und durch die Wahl der Temperatur gezielt ein Teil der Sulfochloridgruppen mit der Aminocarbonsäure umgesetzt und der andere Teil zur Sulfosäuregruppe hydrolysiert werden. Als Base kommen beispielsweise die Alkali- und Erdalkalihydroxide in Betracht, aber auch beispielsweise ihre Carbonate, Acetate, Phosphate oder tertiäre Amine oder Stickstoff enthaltende Heterocyclen wie Pyridin.
Im Falle einer anschließenden Verlackung wird die nach dem vorstehenden Verfahren hergestellte Verbindung mit einem E⁺ oder G⁺ zugrundeliegenden Metallsalz, beispielsweise einem Chlorid, Sulfat, Carbonat, Nitrat, Hydroxid, Acetat oder Phosphat der vorstehend genannten Metallkationen, umgesetzt, vorzugsweise im molaren Verhältnis von (0,1 zu 10) bis (10 zu 0,1), bei Temperaturen von 0 bis 200°C, und zweckmäßigerweise in wässrigem oder wässrig-organischem Medium.

Im Falle einer Umsetzung mit einem der vorstehend genannten Ammoniumionen wird die nach dem vorstehenden Verfahren hergestellte Verbindung mit einem E⁺ oder G⁺ zugrundeliegenden Amin oder Ammoniumsalz umgesetzt, vorzugsweise im molaren Verhältnis von (0,1 zu 10) bis (10 zu 0,1), bei Temperaturen von 0 bis 200°C, und zweckmäßigerweise in wässrigem oder wässrig-organischem Medium.

Normalerweise bestehen die erfindungsgemäß hergestellten Pigmentdispergatoren aus einer Mischung mit verschiedenen Substitutionsgraden, so dass die Zahlen s, n und s+n auch gebrochene Zahlenwerte annehmen können. Auch können die besagten Zahlenwerte kleiner als 1 sein, so dass bereits bei der erfindungsgemäßen Herstellung des Pigmentdispergators eine Pigmentzubereitung entstehen kann.

Gegenstand der vorliegenden Erfindung ist weiterhin eine Pigmentzubereitung, gekennzeichnet durch einen Gehalt an
a) mindestens einem organischen Basispigment und
b) mindestens einem Pigmentdispergator der Formel (II), 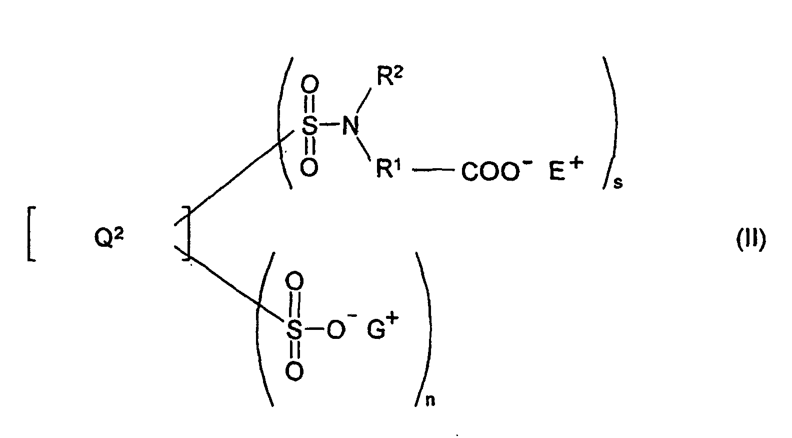
worin
- Q²: ein Rest eines organischen Pigments aus der Gruppe der Phthalocyanine ohne oder mit zentralem Metallkation, wie z.B. Cu, Al, Zn, Fe, Ni oder Co, gegebenenfalls mit 1 bis 8 Halogenatomen, wobei Halogen Cl oder Br ist; Azo-, Benzimidazolon-, Disazokondensations-, Perinon-, Chinacridon-, Chinacridonchinon-, Anthanthron-, Indanthron-, Dioxazin-, wie beispielsweise Triphendioxazin, Diketopyrrolopyrrol-, Indigo-, Thioindigo-, Thiazinindigo-, Isoindolin-, Isoindolinon-, Pyranthron-, Isoviolanthron-, Flavanthron- oder Anthrapyrimidin-Pigmente ist; und
- s, n, R¹, R², E⁺ und G⁺: die oben genannten Bedeutungen haben.

Bevorzugte Reste Q² eines organischen Pigments im Sinne der vorliegenden Erfindung sind beispielsweise C.I. Pigment Yellow 1, 3, 12, 13, 14, 16, 17, 62, 65, 73, 74, 75, 81, 83, 93, 95, 97, 98, 106, 108, 109, 110, 111, 113, 114, 120, 126, 127, 128, 129, 138, 139, 147, 150, 151, 153, 154, 155, 168, 173, 174, 175, 176, 180, 181, 183, 185, 188, 191, 191:1, 194, 198, 199, 213; Pigment Orange 5, 13, 16, 34, 36, 38, 42, 43, 46, 48, 49, 60, 61, 62, 64, 67, 71, 72, 73, 74; Pigment Red 2, 3, 4, 7, 8, 9, 10, 12, 14, 17, 22, 23, 38, 48:1-4, 49:1-2, 52:1-2, 53:1-3, 57:1, 60, 60:1, 63:1, 68, 81, 81:1-2, 88, 112, 122, 137, 144, 146, 147, 166, 168, 170, 171, 175, 176, 177, 184, 185, 187, 188, 192, 194, 202, 206, 207, 208, 209, 210, 214, 220, 221, 242, 247, 251, 253, 254, 255, 256, 257, 262, 264, 266, 270, 272; Pigment Violet 1, 19, 23, 32, 37; Pigment Brown 23, 25; Pigment Blue 15, 15:1-4, 15:6, 56, 60, 61; C.l. Pigment Green 7 oder 36.

Unter Basispigment gemäß a) werden organische Pigmente oder Mischungen organischer Pigmente verstanden, die auch als übliche Pigmentzubereitungen vorliegen können.
Geeignete Basispigmente gemäß a) für die Herstellung der erfindungsgemäßen Pigmentzubereitungen sind beispielsweise Perylen-, Perinon-, Chinacridon-, Chinacridonchinon-, Anthrachinon-, Anthanthron-, Benzimidazolon-, Disazokondensations-, Azo-, Indanthron-, Phthalocyanin-Pigmente ohne oder mit zentralern Metallkation, wie z.B. Cu, Al, Zn, Fe, Ni oder Co, gegebenenfalls mit 1 bis 16 Chlor- und/oder Bromatomen; Triarylcarbonium-, Dioxazin-, wie beispielsweise Triphendioxazin, Aminoanthrachinon-, Diketopyrrolopyrrol-, Indigo-, Thioindigo-, Thiazinindigo-, Isoindolin-, Isoindolinon-, Pyranthron-, Isoviolanthron-, Flavanthron-, Anthrapyrimidin-Pigmente oder Pigmentruße; oder Mischkristalle oder Mischungen davon.

Besonders bevorzugte Basispigmente gemäß a) im Sinne der vorliegenden Erfindung sind beispielsweise C.l. Pigment Yellow 1, 3, 12, 13, 14, 16, 17, 62, 65, 73, 74, 75, 81, 83, 93, 95, 97, 98, 106, 108, 109, 110, 111, 113, 114, 120, 126, 127, 128, 129, 138, 139, 147, 150, 151, 153, 154, 155, 168, 173, 174, 175, 176, 180, 181, 183, 185, 188, 191, 191:1, 194, 198, 199, 213; Pigment Orange 5, 13, 16, 34, 36, 38, 42, 43, 46, 48, 49, 60, 61, 62, 64, 67, 71, 72, 73, 74; Pigment Red 2, 3, 4, 7, 8, 9, 10, 12, 14, 17, 22, 23, 38, 48:1-4, 49:1-2, 52:1-2, 53:1-3, 57:1, 60, 60:1, 63:1, 68, 81, 81:1-2, 88, 112, 122, 123, 137, 144, 146, 147, 149, 166, 168, 170, 171, 175, 176, 177, 178, 179, 184, 185, 9 87, 188, 190, 192, 194, 202, 206, 207, 208, 209, 210, 214, 220, 221, 224, 242, 247, 251, 253, 254, 255, 256, 257, 262, 264, 266, 270, 272; Pigment Violet 1, 19, 23, 29, 32, 37; Pigment Brown 23, 25; Pigment Blue 15, 15:1-4, 15:6, 56, 60, 61; C.I. Pigment Green 7, 36 und Pigment Black 1, 32.

Die erfindungsgemäßen Pigmentzubereitungen können neben dem a) Basispigment und dem b) Pigmentdispergator noch c) Hilfsmittel enthalten, wie beispielsweise Tenside, nichtpigmentäre und pigmentäre Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon.

Bevorzugte Pigmentzubereitungen im Sinne der vorliegenden Erfindung bestehen im wesentlichen aus
a) 50 bis 99,9 Gew.-%, vorzugsweise 55 bis 99,5 Gew.-%, besonders bevorzugt 60 bis 99 Gew.-%, mindestens eines Basispigments gemäß a),
b) 0,1 bis 25 Gew.-%, vorzugsweise 0,5 bis 20 Gew.-%, besonders bevorzugt 1 bis 15 Gew.-%, mindestens eines, vorzugsweise 1 oder 2; Pigmentdispergators der Formel (II),
c) 0 bis 25 Gew.-%, vorzugsweise 0 bis 15 Gew.-% an Hilfsmitteln,
wobei die Anteile der jeweiligen Komponenten auf das Gesamtgewicht der Zubereitung (100 Gew.-%) bezogen sind.

Als Tenside kommen anionische oder anionaktive, kationische oder kationaktive und nichtionische Substanzen oder Mischungen dieser Mittel in Betracht. Als anionaktive Substanzen kommen beispielsweise Fettsäuretauride, Fettsäure-N-methyltauride, Fettsäureisethionate, Alkylphenylsulfonate, Alkylnaphthalinsulfonate, Alkylphenolpolyglykolethersulfate, Fettalkoholpolyglykolethersulfate, Fettsäureamid-polyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, beispielsweise Palmitin-, Stearin- und Ölsäure; Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze, in Betracht. Besonders bevorzugt sind Harzseifen, d.h. Alkalisalze von Harzsäuren.
Als kationaktive Substanzen kommen beispielsweise quaternäre Ammoniumsalze, Fettaminoxalkylate, oxalkylierte Polyamine, Fettaminpolyglykolether, Fettamine, von Fettaminen oder Fettalkoholen abgeleitete Di- und Polyamine und deren Oxalkylate, von Fettsäuren abgeleitete Imidazoline, und Salze dieser kationenaktiven Substanzen, wie beispielsweise Acetate, in Betracht.
Als nichtionogene Substanzen werden in diesem Zusammenhang neben den ungeladenen, nicht kationen- oder anionenaktiven Substanzen auch innere Salze verstanden, beispielsweise Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkoholalkylenoxid-Addukte und Alkylphenolpolyglykolether.

Mit nichtpigmentären Dispergiermitteln sind Substanzen gemeint, die strukturell nicht durch chemische Modifikation von organischen Pigmenten abgeleitet sind und denen wesentliche pigmentäre Eigenschaften fehlen. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben. Es können polymere Substanzen, beispielsweise Polyolefine, Polyester, Polyether, Polyamide, Polyimine, Polyacrylate, Polyisocyanate, Block-Copolymere daraus, Copolymere aus den entsprechenden Monomeren oder Polymere einer Klasse, die mit wenigen Monomeren einer anderen Klasse modifiziert sind. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Nichtpigmentäre Dispergiermittel können des weiteren auch chemisch mit funktionellen Gruppen modifizierte aromatische, nicht von organischen Pigmenten abgeleitete Substanzen sein. Nichtpigmentäre Dispergiermittel sind dem Fachmann bekannt, im Handel zum Teil erhältlich (z.B. Solsperse®, Avecia; Disperbyk®, Byk, Efka®, Efka) und/oder in der Literatur beschrieben. Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinenmonomeren oder Vinylmonomeren und ethylenisch ungesättigten Carbonsäureestem, urethanhaltige Polymere von ethylenisch ungesättigten Monomeren, urethanmodifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Kammdispergiermittel aus Polyestern und Acrylpolymeren, Phosphorsäureester, von Triazin abgeleitete Polymere, modifizierte Polyether, oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.

Mit pigmentären Dispergiermitteln sind Pigmentdispergatoren gemeint, die sich von einem organischen Pigment als Grundkörper ableiten und durch chemische Modifizierung dieses Grundkörpers hergestellt werden. Auch die pigmentären Dispergiermittel sind dem Fachmann bekannt, im Handel zum Teil erhältlich und/oder in der Literatur beschrieben. Beispielsweise sind es saccharinhaltige Pigmentdispergatoren, piperidylhaltige Pigmentdispergatoren, von Naphthalen oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, Sulfosäuregruppen haltige Pigmentdispergatoren, bekannte Sulfonamidgruppen haltige Pigmentdispergatoren, Ethergruppen haltige Pigmentdispergatoren, oder Carbonsäure-, Carbonsäureester- oder Carbonamidgruppen haltige Pigmentdispergatoren.

Die erfindungsgemäßen Pigmentzubereitungen können als vorzugsweise wässrige Presskuchen zum Einsatz kommen, in der Regel handelt es sich jedoch um feste Systeme von rieselfähiger, pulverförmiger Beschaffenheit oder um Granulate.

Der erfindungsgemäß erzielbare Dispergiereffekt beruht vermutlich auf einer Modifizierung der Oberflächenstruktur der Basispigmente mit dem Pigmentdispergator gemäß b). So sind in einer Reihe von Fällen die Wirksamkeit des Pigmentdispergators gemäß b) und die Qualität der damit erzeugten Pigmentzubereitungen abhängig vom Zeitpunkt der Zugabe des Pigmentdispergators gemäß b) im Herstellungsprozess des Basispigments. Werden mehr als ein Pigmentdispergator gemäß b) eingesetzt, so können sie gleichzeitig oder zu verschiedenen Zeitpunkten zugegeben werden oder können vor der Zugabe gemischt werden.

Die Wirksamkeit des Pigmentdispergators gemäß b) kann auch von seiner Teilchengröße und Teilchenform sowie vom Umfang der belegbaren Pigmentoberfläche abhängen. Es kann vorteilhaft sein, den Pigmentdispergator gemäß b) erst im in Aussicht genommenen Anwendungsmedium dem Basispigment zuzufügen. Die jeweilige optimale Konzentration des Pigmentdispergators gemäß b) muss durch orientierende Vorversuche ermittelt werden, da die Verbesserung der Eigenschaften der Basispigmente gemäß a) nicht immer linear mit der Pigmentdispergatormenge einhergeht.

Die erfindungsgemäßen Pigmentzubereitungen können Mischungen von einem oder mehreren, vorzugsweise 1, 2 oder 3, Basispigmenten gemäß a) mit einem oder mehreren, vorzugsweise 1 oder 2, der Pigmentdispergatoren gemäß b) sein. Gegenstand der Erfindung ist auch ein Verfahren zur Herstellung einer erfindungsgemäßen Pigmentzubereitung, dadurch gekennzeichnet, dass man den oder die Pigmentdispergator(en) gemäß b) und das oder die Basispigment(e) gemäß a) miteinander mischt oder während ihres Herstellungsprozesses aufeinander einwirken lässt. Der Herstellungsprozess eines organischen Pigments umfasst dessen Synthese, Feinverteilung und/oder Dispergierung, beispielsweise durch Mahlung, Knetung oder Umfällen, gegebenenfalls Finish, sowie die Isolierung als Presskuchen oder als trockenes Granulat oder Pulver. Beispielsweise kann der Pigmentdispergator gemäß b) vor, während oder nach einem der üblichen Verfahrensschritte wie beispielsweise der Synthese, Feinverteilungsprozess, Finish, Isolation, Trocknung oder Pulverisierung zugegeben werden. So kann beispielsweise eine Zugabe bereits bei der Synthese zu feinen Teilchen führen. Selbstverständlich kann der Pigmentdispergator gemäß b) auch in Teilportionen zu unterschiedlichen Zeiten zugegeben werden.

Die Zugabe des Pigmentdispergators gemäß b) im Rahmen eines Feinverteilungsprozesses erfolgt beispielsweise vor oder während einer Salzknetung, vor oder während einer Trockenmahlung eines Rohpigments oder vor oder während einer Nassmahlung eines Rohpigments.
Gleichfalls bewährt hat sich die Zugabe des Pigmentdispergators gemäß b) vor oder nach einem Finish des Basispigments in wässrigem oder wässrig-organischem Medium bei beliebigen pH-Werten oder in organischem Medium.

Es ist auch möglich, die Verlackung des Pigmentdispergators gemäß b) durch Umsetzung seiner freien Säure mit einem Metallsalz oder seine Umsetzung mit einer Ammoniumverbindung mit der Herstellung der erfindungsgemäßen Pigmentzubereitung zu kombinieren. Beispielsweise kann der Pigmentdispergator gemäß b) erst in Form seiner freien Säure zu einer Suspension des Basispigments gemäß a) zugegeben werden und dann die Zugabe eines Metallsalzes oder einer Ammoniumverbindung in Gegenwart des Basispigments gemäß a) erfolgen. Eine andere mögliche Variante ist die separate Verlackung oder Umsetzung des Pigmentdispergators gemäß b) mit einem Metallsalz oder einer Ammoniumverbindung zu einer Suspension und Zugabe dieser Suspension zur Suspension eines Basispigments gemäß b).

Der Pigmentdispergator gemäß b) kann auch dem vorzugsweise wasserfeuchten Pigmentpreßkuchen vor der Trocknung zugesetzt und eingearbeitet werden, wobei der Pigmentdispergator gemäß b) selbst ebenfalls als Presskuchen vorliegen kann. Es ist weiterhin möglich, Trockenmischungen vom Pulver oder Granulat des Pigmentdispergators gemäß b) mit dem Pulver oder Granulat des Basispigments gemäß a) vorzunehmen, oder die Mischung bei einer Mahlung oder Pulverisierung der Komponente a) und b) zu erzielen.

Die erfindungsgemäßen Pigmentzubereitungen zeichnen sich besonders in Lacken durch hervorragende coloristische und rheologische Eigenschaften aus, insbesondere durch eine hervorragende Rheologie, hohe Flockungsstabilität, hohe Transparenz, leichte Dispergierbarkeit, gutes Glanzverhalten, hohe Farbstärke, einwandfreie Überlackier- und Lösemittelechtheiten sowie sehr gute Wetterechtheit. Sie können in lösemittelhaltigen oder wässrigen Systemen eingesetzt werden.

Die erfindungsgemäß hergestellten Pigmentzubereitungen lassen sich zum Pigmentieren von hochmolekularen organischen Materialien natürlicher oder synthetischer Herkunft einsetzen, beispielsweise von Kunststoffen, Harzen, Lacken, Anstrichfarben oder elektrophotographischen Tonern und Entwicklern, sowie von Tinten und Druckfarben.

Hochmolekulare organische Materialien, die mit den genannten Pigmentzubereitungen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, beispielsweise Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen. Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmentzubereitungen als Blend oder in Form von Präparationen oder Dispersionen zu benutzen. Bezogen auf das zu pigmentierende, hochmolekulare organische Material setzt man die erfindungsgemäßen Pigmentzubereitungen in einer Menge von 0,05 bis 30 Gew.-%, vorzugsweise 0,1 bis 15 Gew.-% ein.

Die erfindungsgemäßen Pigmentdispergatoren und Pigmentzubereitungen sind auch geeignet als Farbmittel in elektrophotographischen Tonern und Entwicklern, wie beispielsweise Ein- oder Zweikomponentenpulvertonem (auch Ein- oder Zweikomponenten-Entwickler genannt), Magnettoner, Flüssigtoner, Polymerisationstoner sowie Spezialtoner (Lit: L.B. Schein, "Electrophotography and Development Physics"; Springer Series in Electrophysics 14, Springer Verlag, 2nd edition, 1992).

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäßen Pigmentdispergatoren und Pigmentzubereitungen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen (J.F. Hughes, "Electrostatics Powder Coating" Research Studies, John Wiley & Sons, 1984).

Als Pulverlackharze werden typischerweise Epoxidharze, carboxyl-und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Pigmentdispergatoren und Pigmentzubereitungen als Farbmittel in Ink-Jet Tinten auf wässriger und nichtwässriger Basis sowie in solchen Tinten, die nach dem Hot-melt-Verfahren arbeiten, geeignet.

Weiterhin sind die erfindungsgemäßen Pigmentdispergatoren und Pigmentzubereitungen auch als Farbmittel für Farbfilter sowohl für die additive wie subtraktive Farberzeugung geeignet.

Es ist auch möglich, dass erst im Anwendungsmedium der Pigmentdispergator b) dem Basispigment a), oder umgekehrt, zugegeben wird.
Gegenstand der Erfindung ist daher auch eine Pigmentpräparation, bestehend im wesentlichen aus einem oder mehreren organischen Basispigmenten a), einem oder mehreren Pigmentdispergatoren gemäß b), dem besagten hochmolekularen organischen Material, insbesondere Lack, gegebenenfalls oberflächenaktiven Mittel und/oder weiteren üblichen Zusatzstoffen. Die Gesamtmenge an Basispigment plus Pigmentdispergator gemäß b) ist beispielsweise 0,05 bis 30 Gew.-%, vorzugsweise 0,1 bis 15 Gew.-%, bezogen auf das Gesamtgewicht der Pigmentpräparation.

Zur Beurteilung der Eigenschaften der Pigmentzubereitungen auf dem Lacksektor wurden aus der Vielzahl der bekannten Lacke ein Polyesterlack (PE) auf Basis von Celluloseacetobutyrat und eines Melaminharzes, ein High-Solid-Acrylharzeinbrennlack auf Basis einer nichtwässrigen Dispersion (HS) sowie ein wässriger Lack auf Polyurethanbasis (PUR) ausgewählt.

Die Bestimmung der Farbstärke und des Farbtons erfolgte nach DIN 55986. Die Rheologie des Mahiguts nach der Dispergierung (Millbase-Rheologie) wurde visuell anhand der folgenden fünfstufigen Skala bewertet
- 5: dünnflüssig
- 4: flüssig
- 3: dickflüssig
- 2: leicht gestockt
- 1: gestockt

Nach dem Verdünnen des Mahlguts auf die Pigmentendkonzentration wurde die Viskosität mit dem Viskospatel nach Rossmann, Typ 301 der Firma Erichsen beurteilt. Die Bestimmung der Übertackierechtheit erfolgte nach DIN 53221. In den nachfolgenden Beispielen bedeuten Teile jeweils Gewichtsteile und Prozente jeweils Gewichtsprozente, "min" sind Minuten.

### Beispiel 1a

In einem Vierhalskolben werden 250 Teile Chlorsulfonsäure vorgelegt und 25 Teile 1,4-Diketo-3,6-di-(4-biphenyl)-pyrrolo[3,4-c]pyrrol so eingetragen und gelöst, dass die Temperatur 25°C nicht überschreitet. Dann werden innerhalb 15 min 19,6 Teile Thionylchlorid zugetropft und 15 min gerührt. Die Lösung wird innerhalb 15 min auf 1600 Teile Eiswasser, hergestellt aus 1400 Teilen Eis und 200 Teilen Wasser, getropft. Das ausgefallene Sulfochlorid wird filtriert und mit 750 Teilen kaltem Wasser gewaschen. In einem Vierhalskolben werden 70 Teile Eis, 70 Teile Wasser, 26,3 Teile β-Alanin und 38,6 Teile 33%ige wässrige Natronlauge vorgelegt und bei 0 bis 5°C der Sulfochloridpresskuchen eingetragen. Dann wird 1 h bei 0 bis 5°C gerührt, in 30 min auf 25°C erwärmt, 30 min bei 25°C gerührt, in 30 min auf 50 °C erwärmt und 30 min bei 50°C gerührt. Dann werden 300 Teile Wasser zugegeben und in 30 min auf 70°C erwärmt und 30 min bei 70°C gerührt. Mit 150,9 Teilen 10%iger wässriger Salzsäure wird pH 2,0 eingestellt. Das Produkt wird filtriert, mit Wasser gewaschen und bei 80°C getrocknet. Man erhält 40,5 Teile Pigmentdispergator.
Das ¹H-NMR-Spektrum in D₂SO₄ zeigt die erwarteten Signale zwischen 7,5 und 8,2 ppm vom aromatischen Ringsystem und zwei starke Signale bei 2,8 und 3,4 ppm der beiden Methylengruppen. Aus den Intensitäten errechnet sich ein Amidierungsgrad von s=1,7. Beim Verkochen des Sulfochlorids in Wasser entsteht durch Hydrolyse die freie Sulfosäure (siehe Beispiel 1b), bei der man durch massenspektrometrische Untersuchung 2 Sulfonsäuregruppen findet, d.h. s + n = 2 und damit errechnet sich n = 0,3.

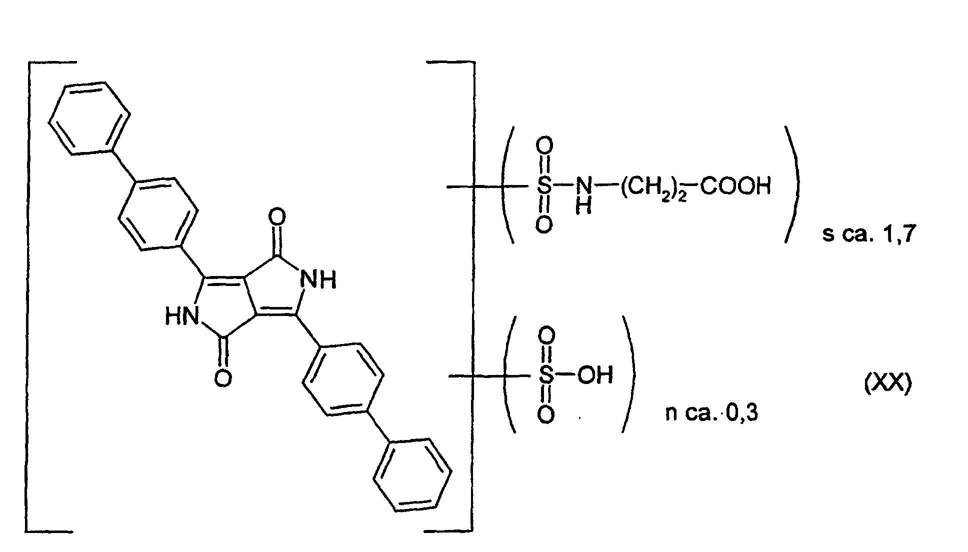

### Beispiel 1b (Bestimmung des Substitutionsgrades n)

Man verfährt wie in Beispiel 1 a) angegeben, mit dem Unterschied, dass der gewaschene Sulfochloridpresskuchen in 800 Teile Wasser eingetragen wird und 7 Stunden bei Siedehitze gerührt wird. Die Suspension wird bei 60°C im Vakuum eingedampft.
Die massenspektrometrische Untersuchung zeigt, dass die Verbindung eine Disulfosäure (Substitutionsgrad von n = 2 und s = 0) ist.

### Beispiel 1c (Vergleichsbeispiel)

Man verfährt wie in Beispiel 1a) angegeben, mit dem Unterschied, dass an Stelle der 26,3 Teile β-Alanin (0.29 mol) 36,5 Teile Taurin (0,29 mol) eingesetzt werden. Man erhält 44,5 Teile Pigmentdispergator.
Das ¹H-NMR-Spektrum in D₂SO₄ zeigt die erwarteten Signale zwischen 7,5 und 8,2 ppm vom aromatischen Ringsystem und zwei starke Signale bei 3,4 und 3,6 ppm der beiden Methylengruppen. Aus den Intensitäten errechnet sich ein Amidierungsgrad von s = 1,7, so dass der Pigmentdispergator dem des Beispiels 1a entspricht mit dem einzigen Unterschied, dass an Stelle der Carbonsäure-Gruppe eine Sulfonsäure-Gruppe an die Methylengruppe gebunden ist.

### Beispiel 1d

260,8 Teile tert.-Amylalkohol werden vorgelegt und 17,1 Teile Natrium zugegeben. Dann wird zum Sieden erhitzt und solange gerührt, bis alles Natrium umgesetzt ist. Nach Abkühlen auf 98°C werden 53,7 Teile 4-Cyanobiphenyl eingetragen und innerhalb von 2 Stunden 39,3 Teile Bernsteinsäurediisopropylester zugetropft. Anschließend wird 4 Stunden bei Siedehitze gerührt und die Reaktionssuspension auf 80°C abgekühlt. In einer Vorlage werden 5,7 Teile Pigmentdispergator der Formel (XX), hergestellt gemäß Beispiel 1a, in 400 Teilen Wasser suspendiert, mit wässriger Natronlauge wird pH 10,3 eingestellt und der Pigmentdispergator gelöst. Dann werden 18,5 Teile Aluminiumsulfat-18Hydrat zugegeben und mit Wasser von 0°C auf 800 Teile aufgefüllt. Auf diese Vorlage wird die 80°C warme Reaktionssuspension gefällt, es wird mit 60 Teilen tert.-Amylalkohol nachgespült. Die Suspension wird zum Sieden erhitzt und 0,5 Stunden bei Siedetemperatur gerührt. Dann wird der Amylalkohol mittels Wasserdampfdestillation entfernt. Nach Abkühlen auf Raumtemperatur werden 400 Teile Methanol zugegeben. Die Suspension wird abgesaugt, mit Methanol und dann mit Wasser gewaschen und bei 80°C getrocknet. Man erhält 50 Teile Pigmentzubereitung. Die Pigmentzubereitung liefert im PUR-Lack transparente und farbstarke Lackierungen, die Metalliclackierung ist farbstark und farbtief.

### Vergleichsbeispiel 1e (zu EP 224 445)

Man verfährt wie im Beispiel 1d) mit dem Unterschied, dass an Stelle des Pigmentdispergators der Formel (XX) gemäß Beispiel 1a) die Disulfosäure gemäß Beispiel 1b) eingesetzt wird.
Die Pigmentzubereitung auf Basis der Disulfosäure liefert im Vergleich zu der Pigmentzubereitung, hergestellt gemäß Beispiel 1d), im PUR-Lack deutlich deckendere und hellere Lackierungen und ist somit unterlegen.

### Vergleichsbeispiel 1f (zu US 5 698 618)

Man verfährt wie im Beispiel 1d) mit dem Unterschied, dass an Stelle des Pigmentdispergators der Formel (XX) gemäß Beispiel 1a) der Pigmentdispergator gemäß Beispiel 1c) eingesetzt wird.
Die Pigmentzubereitung auf Basis des Sulfonamids vom Taurin bewirkt im Vergleich zu der Pigmentzubereitung gemäß Beispiel 1d) (Sulfonamid vom β-Alanin) im HS-Lack eine doppelt so hohe Viskosität (13,1 s gegenüber 6,9 s), im PUR-Lack und im PE-Lack ist die Lackierung farbschwächer. Somit ist diese Pigmentzubereitung unterlegen und nicht so universell einsetzbar wie die erfindungsgemäße Pigmentzubereitung.

### Beispiel 2a

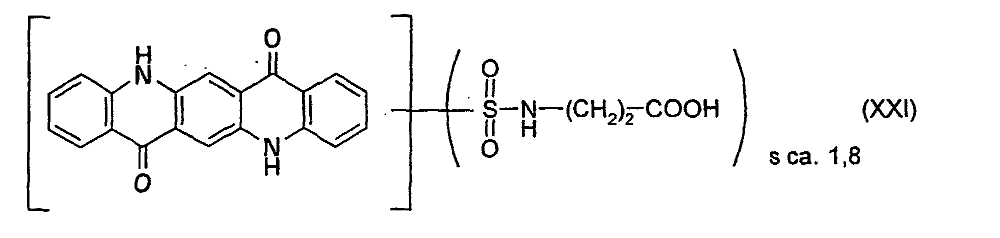

In einem Vierhalskolben werden 360 Teile Chlorsulfonsäure vorgelegt und 30 Teile handelsübliches Chinacridonpigment P.V.19 in 10 Minuten eingetragen und gelöst. Dann wird auf 100°C erwärmt und 4 Stunden bei 100°C gerührt. Nach Abkühlen auf 75°C werden innerhalb 25 min 29,8 Teile Thionylchlorid zugetropft und anschließend wird für 2 Stunden bei 85°C gerührt. Die Lösung wird auf Raumtemperatur abgekühlt und auf 1840 Teile Eiswasser, hergestellt aus 1640 Teilen Eis und 200 Teilen Wasser, getropft. Das ausgefallene Sulfochlorid wird filtriert. In einem Vierhalskolben werden 500 Teile Eis, 500 Teile Wasser, 90,9 Teile β-Alanin 98%ig und 133,3 Teile 33%ige wässrige Natronlauge vorgelegt und bei 0 bis 5°C der Sulfochloridpresskuchen eingetragen. Dann wird 1 h bei 0 bis 5°C gerührt, in 30 min auf 25°C erwärmt, über Nacht bei 25°C gerührt, in 30 min auf 50°C erwärmt und 30 min bei 50°C gerührt, in 30 min auf 70°C erwärmt und 30 min bei 70°C gerührt. Mit 563,6 Teilen 10%iger wässriger Salzsäure wird pH 1,8 eingestellt. Das Produkt wird filtriert, in 1500 Teilen Wasser angeschlemmt und filtriert, in 305 Teilen 10%iger wässriger Salzsäure angeschlemmt und wiederum filtriert und bei 80°C im Vakuum getrocknet. Man erhält 49,8 Teile Pigmentdispergator.
Das ¹H-NMR-Spektrum in D₂SO₄ zeigt die erwarteten Signale bei 9,2; 9,1; 8,2 und 8,0 ppm vom aromatischen Ringsystem und zwei starke Signale bei 3,3 und 2,8 ppm der beiden Methylengruppen. Aus den Intensitäten errechnet sich ein Substitutionsgrad von s = 1,8.

### Beispiel 2b

1,3 Teile Pigmentdispergator der Formel (XXI) gemäß Beispiel 2a) werden in 100 Teilen Wasser suspendiert, mit wässriger Natronlauge 33%ig wird pH 10,8 eingestellt. Dann werden 10 Teile Aluminiumsulfat-18Hydrat zugegeben. Diese Suspension wird zu einer Suspension aus 116,7 Teilen wässrig feuchter Presskuchen 21,4%ig eines handelsüblichen Chinacridonpigments P.R.122, suspendiert in 383,3 Teilen Wasser, zugegeben. Es wird zum Sieden erhitzt und eine Stunde bei Rückfluss gerührt. Nach Abkühlen auf Raumtemperatur wird filtriert, mit Wasser gewaschen und bei 80°C getrocknet. Man erhält 25,7 Teile Pigmentzubereitung.

Die Pigmentzubereitung liefert im PUR-Lack transparente, farbstarke und reine Lackierungen, die Metalliclackierung ist farbstark und brillant, die Überlackierechtheit ist einwandfrei, die Rheologie wird mit 5 bewertet.

### Beispiel 3a

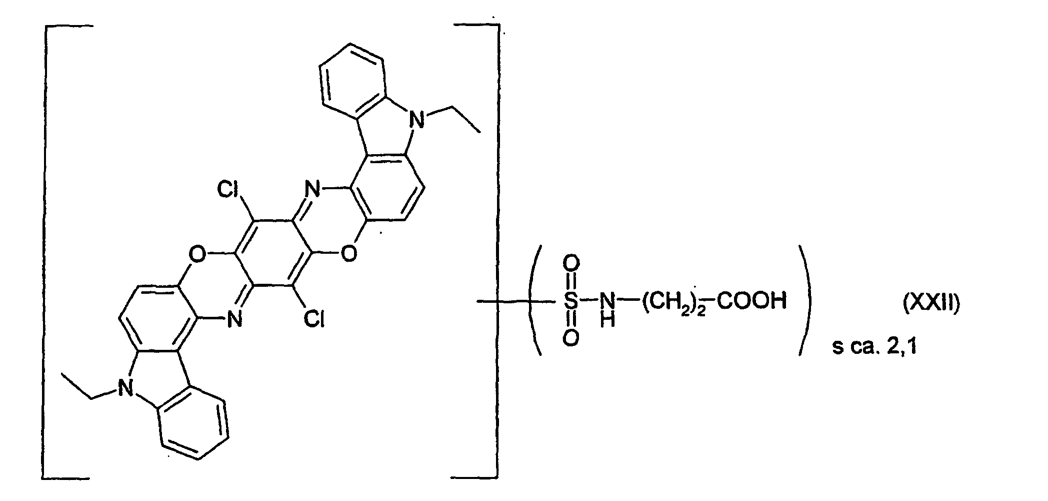

In einem Vierhalskolben werden 350 Teile Chlorsulfonsäure vorgelegt und 85 Teile Thionylchlorid zugegeben. Dann werden 50 Teile handelsübliches Dioxazinpigment P.V.23 in 10 Minuten eingetragen und gelöst. Es wird 19 Stunden bei Raumtemperatur gerührt. Die Lösung wird auf 2120 Teile Eiswasser, hergestellt aus 1920 Teilen Eis und 200 Teilen Wasser, getropft. Das ausgefallene Sulfochlorid wird filtriert und mit 750 Teilen kaltem Wasser gewaschen. In einem Vierhalskolben werden 250 Teile Eis, 250 Teile Wasser, 40,9 Teile β-Alanin 98%ig und 60,0 Teile 33%ige wässrige Natronlauge vorgelegt und bei 0 bis 5°C der Sulfochloridpresskuchen eingetragen. Dann wird 1 h bei 0 bis 5°C gerührt, in 30 min auf 25°C erwärmt, über Nacht bei 25°C gerührt, in 30 min auf 50°C erwärmt und 30 min bei 50°C gerührt, in 30 min auf 70°C erwärmt und 30 min bei 70°C gerührt. Mit 232,6 Teilen 10%iger wässriger Salzsäure wird pH 1,9 eingestellt. Das Produkt wird filtriert, zweimal in 1500 Teilen Wasser angeschlemmt und filtriert, in 462 Teilen 10%iger wässriger Salzsäure angeschlemmt und wiederum filtriert und bei 80°C im Vakuum getrocknet. Man erhält 69,3 Teile Pigmentdispergator.
Die Elementaranalyse ergibt 7,4% Schwefel, das entspricht einem Substitutionsgrad von s = 2,1.

### Beispiel 3b

2,5 Teile Pigmentdispergator der Formel (XXII) gemäß Beispiel 3a) werden in 100 Teilen Wasser suspendiert, mit wässriger Natronlauge 33%ig wird pH 11,1 eingestellt, dann wird eine Lösung von 5,1 Teilen Calciumchlorid 98%ig in 100 Teilen Wasser zugegeben. Diese Suspension des Pigmentdispergators wird zu einer Pigmentsuspension gegeben, die aus 441,9 Teilen Wasser und 58,2 Teilen wässrig feuchtem Presskuchen 43%ig eines handelsüblichen Dioxazinpigments P.V.23 hergestellt wurde. Es wird zum Sieden erhitzt und eine Stunde bei Rückfluss gerührt. Nach Abkühlen auf Raumtemperatur wird filtriert, mit Wasser gewaschen und bei 80°C getrocknet. Man erhält 26,7 Teile Pigmentzubereitung.
Die Pigmentzubereitung liefert im PUR-Lack transparente und farbstarke Lackierungen, die Metalliclackierung ist farbstark und farbtief. Die Überlackierechtheit ist einwandfrei.

### Beispiel 4a

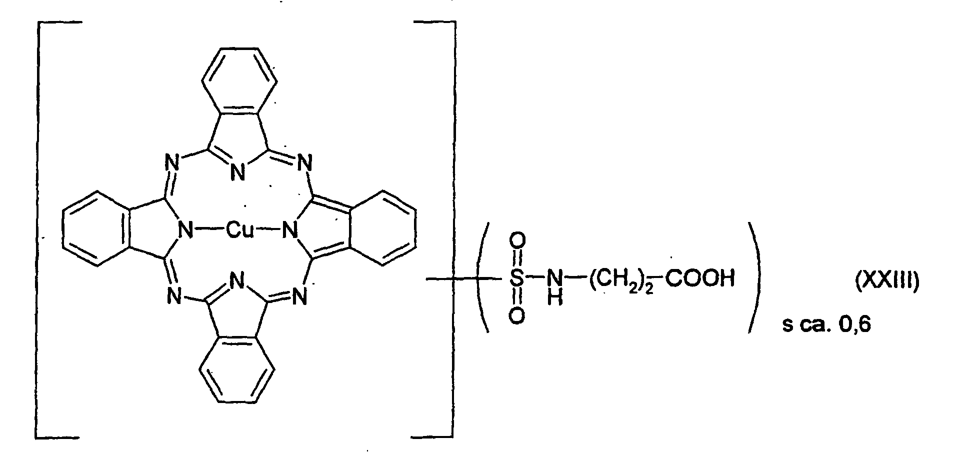

In einem Vierhalskolben werden 372,8 Teile Chlorsulfonsäure vorgelegt und 57,6 Teile eines Rohpigments des Kupferphthalocyanins P. Bluel15 eingetragen und gelöst. Dann wird auf 80°C geheizt und 4 h bei 80°C gerührt. Nach Abkühlen auf 75°C werden 53,6 Teile Thionylchlorid bei 75°C in 30 min zugetropft. Dann wird auf 85°C geheizt und 2 h bei 85°C gerührt. Nach Abkühlen auf Raumtemperatur wird die Lösung auf 2042 Teile Eiswasser, hergestellt aus 1842 Teilen Eis und 200 Teilen Wasser, getropft. Das ausgefallene Sulfochlorid wird filtriert und mit 750 Teilen kaltem Wasser gewaschen. In einem Vierhalskolben werden 375 Teile Eis, 375 Teile Wasser, 45,5 Teile β-Alanin 98%ig und 66,7 Teile 33%ige wässrige Natronlauge vorgelegt und bei 0 bis 5°C der Sulfochloridpresskuchen eingetragen. Dann wird 1 h bei 0 bis 5°C gerührt, in 30 min auf 25°C erwärmt, 30 min bei 25°C gerührt, in 30 min auf 50°C erwärmt und 30 min bei 50°C gerührt, in 30 min auf 70°C erwärmt und 30 min bei 70°C gerührt. Mit 371,7 Teilen 10%iger wässriger Salzsäure wird pH 1,9 eingestellt. Das Produkt wird filtriert, mit Wasser gewaschen und bei 80°C getrocknet. Man erhält 61 Teile einer Pigmentzubereitung.
Die Elementaranalyse ergibt 2,8% Schwefel und 60,9% Kohlenstoff. Das entspricht einem Substitutionsgrad von s = 0,6.

### Beispiel 4b (Feinteiliges CuPc)

200 Teile eines handelsüblichen Tetrachlor-Kupferphthalocyaninpigments P. Blue 15:1 werden in 2000 Teilen 96%iger Schwefelsäure gelöst. Die Lösung wird in 25 min auf eine Mischung aus 5200 Teilen Eis und 24000 Teilen Wasser gegossen. Die Suspension des Pigments wird filtriert und mit Wasser gewaschen. Man erhält 989,6 Teile wässrigen Pigmentpresskuchen 20,5%ig, der in drei Portionen zu je 329,8 Teilen Pigmentpresskuchen geteilt wird. Eine Portion dieses Pigmentpresskuchens wird in 1087,7 Teilen Wasser suspendiert, mit 33%iger wässriger Natronlauge wird pH 9,5 eingestellt und es werden 2 Teile eines C₁₂-Alkohols zugegeben. Die Suspension wird eine Stunde bei 130°C unter Druck gerührt. Mit den beiden anderen Portionen wird ebenso verfahren. Die drei Suspensionen werden vereinigt, filtriert und gewaschen. Man erhält 858 Teile wässrigen Pigmentpresskuchen 22,8%ig. 100 Teile dieses Pigmentpresskuchens werden bei 80°C getrocknet, man erhält 22,8 Teile trockenes Pigment.

Beispiel 4c 103,3 Teile des gemäß Beispiel 4b) hergestellten Pigmentpresskuchens 22,8%ig werden in 366,8 Teilen Wasser suspendiert. Mit 33%iger wässriger Natronlauge wird pH 8,3 gestellt, dann wird auf 60°C geheizt.
Es werden 2,4 Teile Pigmentdispergator der Formel (XXIII) gemäß Beispiel 4a) in 200 Teilen Wasser suspendiert, mit 33%iger wässriger Natronlauge wird pH 10,8 gestellt, und dann werden 20 Teile Aluminiumsulfat-18Hydrat zugegeben. Diese Mischung wird zu der 60°C warmen Pigmentsuspension gegeben. Es wird 30 min bei 60°C gerührt, dann wird filtriert, mit Wasser gewaschen und bei 80°C getrocknet. Man erhält 25,5 Teile Pigmentzubereitung.
Die Pigmentzubereitung liefert im PUR-Lack transparente und farbstarke Lackierungen, die Metalliclackierung ist farbstark und farbtief. Im Vergleich zu einer Lackierung vom gemäß Beispiel 4b hergestellten trockenen Pigment ohne Pigmentdispergator ist sie deutlich farbstärker, der Metalliclack ist merklich brillanter.

### Beispiel 5a

In einem Vierhalskolben werden 250 Teile Chlorsulfonsäure vorgelegt und 25 Teile 1,4-Diketo-3,6-di-(4-biphenyl)-pyrrolo[3,4-c]pyrrol so eingetragen und gelöst, dass die Temperatur 25°C nicht überschreitet. Dann werden innerhalb 15 min 19,6 Teile Thionylchlorid zugetropft und 15 min gerührt. Die Lösung wird innerhalb 15 min auf 1600 Teile Eiswasser, hergestellt aus 1400 Teilen Eis und 200 Teilen Wasser, getropft. Das ausgefallene Sulfochlorid wird filtriert und mit 750 Teilen kaltem Wasser gewaschen. In einem Vierhalskolben werden 250 Teile Eis, 250 Teile Wasser, 38,4 Teile 6-Aminocapronsäure und 38,6 Teile 33%ige wässrige Natronlauge vorgelegt und bei 0 bis 5°C der Sulfochloridpresskuchen eingetragen. Dann wird 1 h bei 0 bis 5°C gerührt, in 30 min auf 25°C erwärmt, 30 min bei 25°C gerührt, in 30 min auf 50°C erwärmt, 30 min bei 50°C gerührt, in 30 min auf 70°C erwärmt und 30 min bei 70°C gerührt. Mit 163,8 Teilen 10%iger wässriger Salzsäure wird pH 1,8 eingestellt. Das Produkt wird filtriert, mit Wasser gewaschen und bei 80°C getrocknet. Man erhält 42,1 Teile Pigmentdispergator. Das ¹H-NMR-Spektrum in D₂SO₄ zeigt die erwarteten Signale zwischen 7,6 und 7,9 ppm vom aromatischen Ringsystem und vier Signale bei 1,1; 1,4; 2,5 und 3,1 ppm der fünf Methylengruppen, das Signal bei 1,4 ppm zeigt doppelte Intensität verglichen mit den drei anderen aliphat. Signalen. Aus den Intensitäten errechnet sich ein Amidierungsgrad von s ca. 1,7. Gemäß Beispiel 1b werden bei der Sulfochlorierung zwei Sulfonsäuregruppen eingeführt, d.h. s + n = 2 und damit errechnet sich n ca. 0,3.

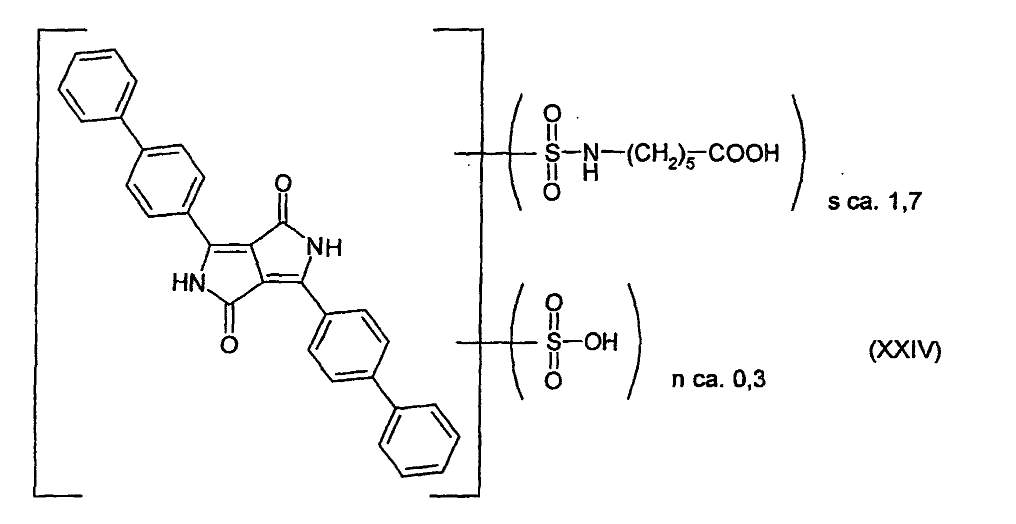

### Beispiel 5d

40 Teile eines handelsüblichen Anthrachinonpigments P.R.177 werden mit 2 Teilen Pigmentdispergator der Formel (XXIV), hergestellt gemäß Beispiel 5a, zu einer Pigmentzubereitung gemischt. Die Pigmentzubereitung liefert im PE-Lack farbstarke Lackierungen, die Metalliclackierung ist farbstark und brillant.

Beispiel 6a

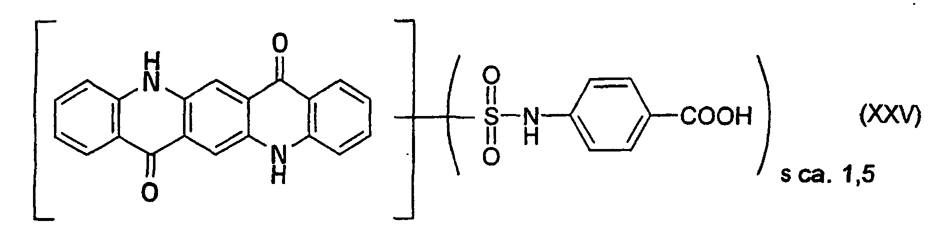

In einem Vierhalskolben werden 360 Teile Chlorsulfonsäure vorgelegt und 30 Teile handelsübliches Chinacridonpigment P.V.19 in 10 Minuten eingetragen und gelöst. Dann wird auf 100°C erwärmt und 4 Stunden bei 100°C gerührt. Nach Abkühlen auf 75°C werden innerhalb 25 min 29,8 Teile Thionylchlorid zugetropft und anschließend wird für 2 Stunden bei 85°C gerührt. Die Lösung wird auf Raumtemperatur abgekühlt und auf 1800 Teile Eiswasser, hergestellt aus 1600 Teilen Eis und 200 Teilen Wasser, getropft. Das ausgefallene Sulfochlorid wird filtriert. In einem Vierhalskolben werden 500 Teile Eis, 500 Teile Wasser, 138,6 Teile 4-Aminobenzoesäure und 133,3 Teile 33%ige wässrige Natronlauge vorgelegt und bei 0 bis 5°C der Sulfochloridpresskuchen eingetragen. Dann wird 1 h bei 0 bis 5°C gerührt, in 30 min auf 25°C erwärmt, über Nacht bei 25°C gerührt, in 30 min auf 50°C erwärmt und 30 min bei 50°C gerührt, in 30 min auf 70°C erwärmt und 30 min bei 70°C gerührt, in 30 min auf 90°C erwärmt und 30 min bei 90°C gerührt, durch Zugabe von ca. 175 Teilen 33%iger wässriger Natronlauge während des Temperaturprogramms wird der pH > 10 gehalten. Mit 728,8 Teilen 10%iger wässriger Salzsäure wird pH 1,8 eingestellt. Das Produkt wird filtriert, in 400 Teilen 10%iger wässriger Salzsäure angeschlämmt und filtriert und bei 80°C im Vakuum getrocknet. Man erhält 61,8 Teile Pigmentdispergator. Das ¹H-NMR-Spektrum in D₂SO₄ zeigt die erwarteten Signale bei 9,2; 8,95; 8,15; 7,9; 7,75; 7,3 und 7,0 ppm von den aromatischen Ringsystemen. Aus den Intensitäten errechnet sich ein Substitutionsgrad von s ca. 1,5.

### Beispiel 6b

4 Teile Pigmentdispergator der Formel (XXV), hergestellt gemäß Beispiel 6a), werden mit 40 Teilen eines handelsüblichen Chinacridonpigments P. R. 122 zu einer Pigmentzubereitung gemischt.
Die Pigmentzubereitung liefert gegenüber dem zur Mischung verwendeten handelsüblichen Chinacridonpigment P.R.122 im PUR-Lack transparentere, farbstärkere und reinere Lackierungen, die Metalliclackierung ist farbstärker und brillanter. Auch im HS-Lack und im PE-Lack werden brillantere und farbstärkere Metalliclackierungen erhalten. Im HS Lack verringert sich durch den Pigmentdispergator die Viskosität (1,5 s gegenüber 4,7 s), der Glanzwert wird erhöht (62 gegenüber 47). Auch im PE-Lack verringert sich die Viskosität (2,9 s gegenüber 5,0 s).

### Beispiel 7a

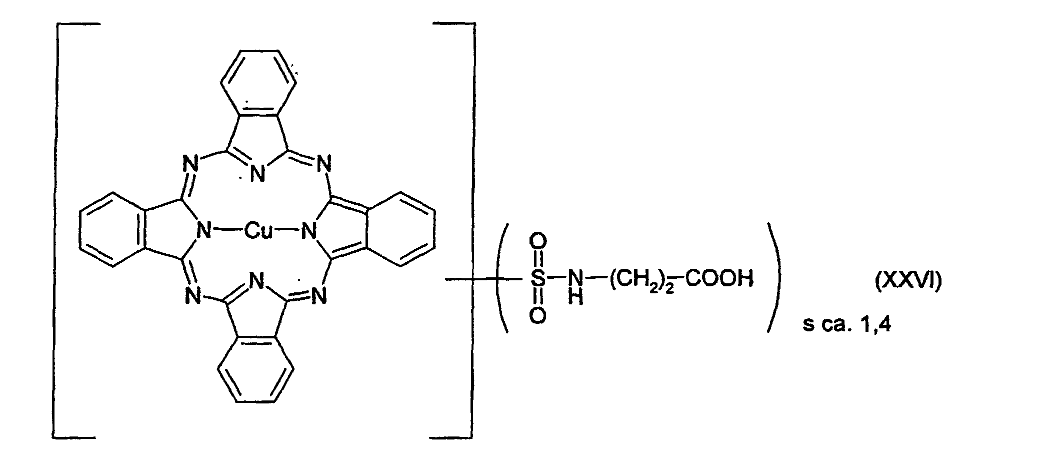

In einem Vierhalskolben werden 372,8 Teile Chlorsulfonsäure vorgelegt und 57,6 Teile eines Rohpigments des Kupferphthalocyanins P. Blue15 eingetragen und gelöst. Dann wird auf 95°C geheizt und 4 h bei 95°C gerührt. Nach Abkühlen auf 75°C werden 53,6 Teile Thionylchlorid bei 75°C in 25 min zugetropft. Dann wird auf 85°C geheizt und 2 h bei 85°C gerührt. Nach Abkühlen auf T < 40°C wird die Lösung auf 2050 Teile Eiswasser, hergestellt aus 1850 Teilen Eis und 200 Teilen Wasser, getropft. Das ausgefallene Sulfochlorid wird filtriert und mit 750 Teilen kaltem Wasser gewaschen. In einem Vierhalskolben werden 375 Teile Eis, 375 Teile Wasser, 54,6 Teile β-Alanin 98%ig und 80 Teile 33%ige wässrige Natronlauge vorgelegt und bei 0 bis 5°C der Sulfochloridpresskuchen eingetragen. Dann wird 1 h bei 0 bis 5°C gerührt, in 30 min auf 25°C erwärmt, 30 min bei 25°C gerührt, in 30 min auf 50 °C erwärmt und 30 min bei 50°C gerührt, in 30 min auf 70°C erwärmt und 30 min bei 70°C gerührt. Mit 404,9 Teilen 10%iger wässriger Salzsäure wird pH 1,9 eingestellt. Das Produkt wird filtriert, mit Wasser gewaschen und bei 80°C getrocknet. Man erhält 71,4 Teile einer Pigmentzubereitung.
Die Elementaranalyse ergibt 5,6% Schwefel und 16,8% Stickstoff. Das entspricht einem Substitutionsgrad von s ca. 1,4.

### Beispiel 7b

Ein gemahlenes und handelsübliches Rohpigment eines Kupferphthalocyanins P.Blue 15 wird mit 12 Gew.-% des Pigmentdispergators der Formel (XXVI), hergestellt gemäß Beispiel 7a, in 50%igem iso-Butanol und pH > 12 angerührt und bei 130°C unter Druck gerührt. Nach dem Abkühlen wird das iso-Butanol durch Wasserdampfdestillation entfernt und die Pigmentzubereitung isoliert und getrocknet.
Die Pigmentzubereitung liefert in einem Nitroceflulose-Druckfarbenfirnis einen farbstarken, rotstichigen und transparenten Druck, in einem Alkyd-Melamin-Lacksystem wird eine farbstarke, transparente und glänzende Lackierung von einwandfreier Überlackierechtheit erhalten.

## Patentansprüche

1. Pigmentdispergator der allgemeinen Formel (I), 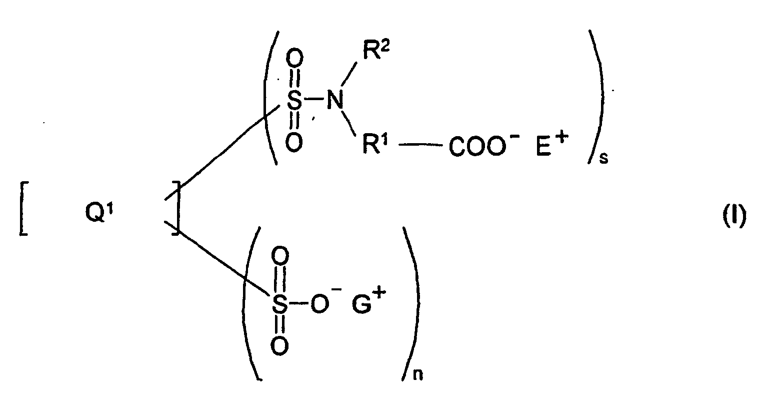 worin
Q¹ ein Rest eines organischen Pigments aus der Gruppe der Perinon-, Chinacridon-, Chinacridonchinon-, Anthanthron-, Indanthron-, Dioxazin-, Diketopyrrolopyrrol-, Indigo-, Thioindigo-, Thiazinindigo-, Isoindolin-, Isoindolinon-, Pyranthron-, Isoviolanthron-, Flavanthron- oder Anthrapyrimidin-Pigmente ist;
s eine Zahl von 1 bis 5 darstellt;
n eine Zahl von 0 bis 4 darstellt;
wobei die Summe von s und n 1 bis 5 beträgt;
R¹ einen bivalenten verzweigten oder unverzweigten, gesättigten oder ungesättigten, aliphatischen Kohlenwasserstoffrest mit 1 bis 20 C-Atomen, oder einen C₅-C₇-Cycloalkylenrest, oder einen bivalenten aromatischen Rest mit 1, 2 oder 3 aromatischen Ringen, wobei die Ringe kondensiert vorliegen oder durch eine Bindung verknüpft sein können, oder einen heterocyclischen Rest mit 1, 2 oder 3 Ringen, enthaltend 1, 2, 3 oder 4 Heteroatome aus der Gruppe O, N und S, oder eine Kombination davon bedeutet; wobei die genannten Kohlenwasserstoff-, Cycloalkylen-, Aromaten- und Heteroaromaten-Reste durch 1, 2, 3 oder 4 Substituenten aus der Gruppe OH, CN, F, Cl, Br, NO₂, CF₃, C₁-C₆-Alkoxy, S-C₁-C₆-Alkyl, NHCONH₂, NHC(NH)NH₂, NHCO-C₁-C₆-Alkyl, C₁-C₆-Alkyl, COOR²⁰, CONR²⁰R²¹, NR²⁰R²¹, SO₃R²⁰ oder SO₂-NR²⁰R²¹ substituiert sein können, wobei R²⁰ und R²¹ gleich oder verschieden sind und Wasserstoff, Phenyl oder C₁-C₆-Alkyl bedeuten;
R² Wasserstoff, HR¹ oder R¹-COO⁻E⁺ bedeutet;
E⁺ und G⁺ unabhängig voneinander H⁺ oder das Äquivalent M^{m+}/m eines Metallkations M^{m+} aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 ist; ein Ammoniumion N⁺R⁹R¹⁰R¹¹R¹²,
wobei die Substituenten R⁹, R¹⁰, R¹¹ und R¹² unabhängig voneinander jeweils ein Wasserstoffatom, C₁-C₃₀-Alkyl, C₂-C₃₀-Alkenyl, C₅-C₃₀-Cycloalkyl, Phenyl, (C₁-C₈)-Alkyl-phenyl, (C₁-C₄)-Alkylen-phenyl, oder eine (Poly)alkylenoxy-gruppe der Formel -[CH(R⁸⁰)-CH(R⁸⁰)-O]ₖ-H sind, in der k eine Zahl von 1 bis 30 ist und die beiden Reste R⁸⁰ unabhängig voneinander Wasserstoff, C₁-C₄-Alkyl oder, sofern k > 1 ist, eine Kombination davon bedeuten;
und worin als R⁹, R¹⁰, R¹¹ und/oder R¹² ausgewiesenes Alkyl, Alkenyl, Cyclophenyl, Phenyl oder Alkylphenyl durch Amino, Hydroxy, und/oder Carboxy substituiert sein können;
oder wobei die Substituenten R⁹ und R¹⁰ zusammen mit dem quartären N-Atom ein fünf- bis siebengliedriges gesättigtes Ringsystem, das ggf. noch weitere Heteroatome aus der Gruppe O, S und N enthält, bilden können; oder wobei die Substituenten R⁹, R¹⁰ und R¹¹ zusammen mit dem quartären N-Atom ein fünf- bis siebengliedriges aromatisches Ringsystem, das ggf. noch weitere Heteroatome aus der Gruppe O, S und N enthält und an dem ggf. zusätzliche Ringe ankondensiert sind, bilden können;
oder worin E⁺ und/oder G⁺ ein Ammoniumion der Formel (Ia) bedeutet, 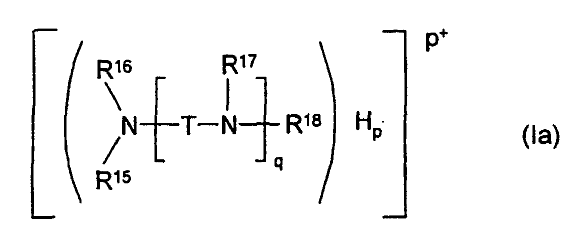 worin
R¹⁵, R¹⁶, R¹⁷ und R¹⁸ unabhängig voneinander Wasserstoff oder eine (Poly)alkylenoxygruppe der Formel -[CH(R⁸⁰)-CH(R⁸⁰)O]ₖ-H bedeuten, in der k eine Zahl von 1 bis 30 ist und die beiden Reste R⁸⁰ unabhängig voneinander Wasserstoff, C₁-C₄-Alkyl oder, sofern k > 1 ist, eine Kombination davon bedeuten;
q eine Zahl von 1 bis 10;
p eine Zahl von 1 bis 5, wobei p ≤ q+1 ist;
T einen verzweigten oder unverzweigten C₂-C₆-Alkylenrest bedeutet; oder worin T, wenn q > 1 ist, auch eine Kombination von verzweigten oder unverzweigten C₂-C₆-Alkylenresten sein kann.

2. Pigmentdispergator nach Anspruch 1, **dadurch gekennzeichnet, dass** s eine Zahl von 1 bis 3, n eine Zahl von 0 bis 2,
und die Summe aus n und s eine Zahl von 1 bis 3 ist.

3. Pigmentdispergator nach Anspruch 1 oder 2, **dadurch gekennzeichnet, dass** R¹ eine verzweigte oder unverzweigte C₁-C₁₀-Alkylen-Gruppe oder ein Phenylenrest bedeutet.

4. Pigmentdispergator nach einem oder mehreren der Ansprüche 1 bis 3, **dadurch gekennzeichnet, dass** R² Wasserstoff oder C₁-C₆-Alkyl bedeutet.

5. Pigmentdispergator nach einem oder mehreren der Ansprüche 1 bis 4, **dadurch gekennzeichnet, dass** E⁺ und G⁺ die Bedeutung H⁺ oder Na⁺ haben, oder wobei im Falle des Äquivalents M^{m+}/m das Metallkation M^{m+} die Bedeutung Ca²⁺, Sr²⁺, Ba²⁺ oder Al³⁺ hat.

6. Verfahren zur Herstellung eines Pigmentdispergators nach einem oder mehreren der Ansprüche 1 bis 4, **dadurch gekennzeichnet, dass** man ein organisches Pigment aus der Gruppe der Perinon-, Chinacridon-, Chinacridonchinon-, Anthanthron-, Indanthron-, Dioxazin-, Diketopyrrolopyrrol-, Indigo-, Thioindigo-, Thiazinindigo-, Isoindolin-, Isoindolinon-, Pyranthron-, Isoviolanthron-, Flavanthron- oder Anthrapyrimidin-Pigmente chlorsulfoniert, das entstandene Sulfochlorid mit einer Aminocarbonsäure der Formel (V), 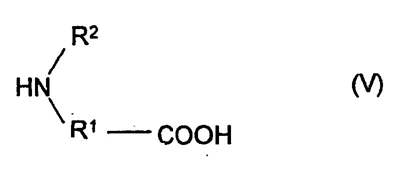 umsetzt, und gegebenenfalls die freie Säure mit einem G⁺ oder E⁺ zugrundeliegenden Metallsalz oder Ammoniumsalz umsetzt.

7. Pigmentzubereitung, **gekennzeichnet durch** einen Gehalt an
a) mindestens einem organischen Pigment und
b) mindestens einem Pigmentdispergator der Formel (II), 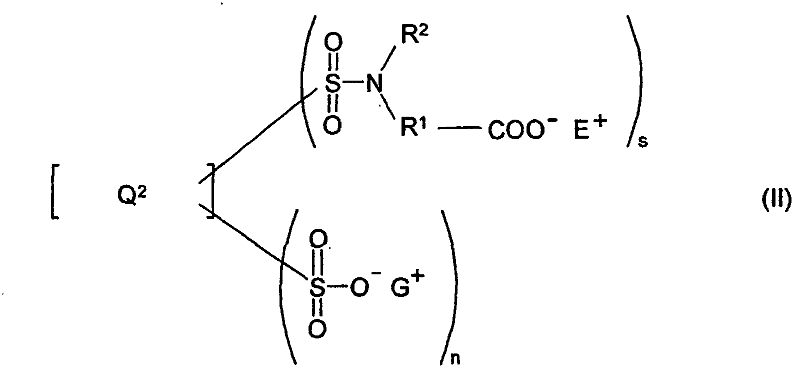
worin
Q² ein Rest eines organischen Pigments aus der Gruppe der Phthalocyanin-, Azo-, Benzimidazolon-, Disazokondensations-, Perinon-, Chinacridon-, Chinacridonchinon-, Anthanthron-, Indanthron-, Dioxazin-, Diketopyrrolopyrrol-, Indigo-, Thioindigo-, Thiazinindigo-, Isoindolin-, Isoindolinon-, Pyranthron-, Isoviolanthron-, Flavanthron- oder Anthrapynmidin-Pigmente ist; und
s, n, R¹, R², E⁺ und G⁺ die in den Ansprüchen 1 bis 5 genannten Bedeutungen haben.

8. Pigmentzubereitung nach Anspruch 7, **dadurch gekennzeichnet, dass** das Pigment gemäß a) ein Perylen-, Perinon-, Chinacridon-, Chinacridonchinon-, Anthrachinon-, Anthanthron-, Benzimidazolon-, Disazokondensations-, Azo-, Indanthron-, Phthalocyanin-, Triarylcarbonium-, Dioxazin-, Aminoanthrachinon-, Diketopyrrolopyrrol-, Indigo-, Thioindigo-, Thiazinindigo-, Isoindolin-, Isoindolinon-, Pyranthron-, Isoviolanthron-, Flavanthron-, Anthrapyrimidin-Pigment oder ein Pigmentruß; oder ein Mischkristall oder eine Mischung davon ist.

9. Pigmentzubereitung nach Anspruch 7 oder 8, bestehend im wesentlichen aus
a) 50 bis 99,9 Gew.-% mindestens eines organischen Pigments gemäß a),
b) 0,1 bis 25 Gew.-% mindestens eines Pigmentdispergators der Formel (II),
c) 0 bis 25 Gew.-% an Hilfsmitteln, wobei die Anteile der jeweiligen Komponenten auf das Gesamtgewicht der Zubereitung (100 Gew.-%) bezogen sind.

10. Verfahren zur Herstellung einer Pigmentzubereitung nach mindestens einem der Ansprüche 7 bis 9, **dadurch gekennzeichnet, dass** man den oder die Pigmentdispergator(en) gemäß b), das oder die Pigment(e) gemäß a) und gegebenenfalls die Komponente c) miteinander mischt oder während des Herstellungsprozesses des Pigments oder Pigmentdispergators aufeinander einwirken lässt.

11. Verwendung einer Pigmentzubereitung nach einem oder mehreren der Ansprüche 7 bis 9 zum Pigmentieren von hochmolekularen organischen Materialien natürlicher oder synthetischer Herkunft, insbesondere von Kunststoffen, Harzen, Lacken, Anstrichfarben, elektrophotographischen Tonern und Entwicklern, sowie von Tinten und Druckfarben.

## Claims

1. A pigment dispersant of the general formula (I) 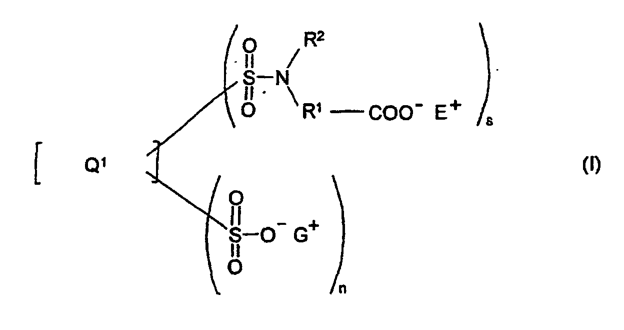 in which
Q¹ is a radical of an organic pigment from the group of the perinone, quinacridone, quinacridonequinone, anthanthrone, indanthrone, dioxazine, diketopyrrolopyrrole, indigo, thioindigo, thiazineindigo, isoindoline, isoindolinone, pyranthrone, isoviolanthrone, flavanthrone or anthrapyrimidine pigments;
s is a number from 1 to 5;
n is a number from 0 to 4;
the sum of s and n being from 1 to 5;
R¹ is a divalent branched or unbranched, saturated or unsaturated, aliphatic hydrocarbon radical having 1 to 20 carbon atoms, or a C₅-C₇-cycloalkylene radical, or a divalent aromatic radical having 1, 2 or 3 aromatic rings, it being possible for the rings to be in fused form or to be linked by a bond or a heterocyclic radical having 1, 2 or 3 rings which contains 1, 2, 3 or 4 heteroatoms from the group O, N, and S, or a combination thereof; it being possible for the aforementioned hydrocarbon, cycloalkylene, aromatic and heteroaromatic radicals to be substituted by 1, 2, 3 or 4 substituents from the group OH, CN, F, CI, Br, NO₂, CF₃, C₁-C₆-alkoxy, S-C₁-C₆-alkyl, NHCONH₂, NHC(NH)NH₂, NHCO-C₁-C₆-alkyl, C₁-C₆-alkyl, COOR²⁰, CONR²⁰R²¹, NR²⁰R²¹, SO₃R²⁰ or SO₂-NR²⁰R²¹, R²⁰ and R²¹ being identical or different and being hydrogen, phenyl or C₁-C₆-alkyl;
R² is hydrogen, HR¹ or R¹-COO⁻E⁺;
E⁺ and G⁺ independently of one another are H⁺ or the equivalent M^{m+}/m of a metal cation M^{m+} from main groups 1 to 5 or transition groups 1 or 2 or 4 to 8 of the periodic system of the chemical elements, m being 1, 2 or 3; an ammonium ion N⁺R⁹R¹⁰R¹¹R^{12,}
where the substituents R⁹, R¹⁰, R¹¹ and R¹² independently of one another are each a hydrogen atom, C₁-C₃₀-alkyl, C₂-C₃₀-alkenyl, C₅-C₃₀-cycloalkyl, phenyl, (C₁-C₈)-alkyl-phenyl, (C₁-C₄)-alkylene-phenyl or a (poly)alkyleneoxy group of the formula -[CH(R⁸⁰)-CH(R⁸⁰)-O]ₖ-H, in which k is a number from 1 to 30 and the two radicals R⁸⁰ independently of one another are hydrogen, C₁-C₄-alkyl or, if k is > 1, a combination thereof;
and in which alkyl, alkenyl, cycloalkyl, phenyl or alkylphenyl R⁹, R¹⁰, R¹¹, and/or R¹² may be substituted by amino, hydroxyl and/or carboxyl;
or where the substituents R⁹ and R¹⁰, together with the quaternary nitrogen atom, are able to form a five- to seven-membered saturated ring system containing, if desired, further heteroatoms from the group consisting of O, S and N;
or where the substituents R⁹, R¹⁰ and R¹¹, together with the quaternary nitrogen atom, are able to form a five- to seven-membered aromatic ring system, containing, if desired, further heteroatoms from the group consisting of O, S and N, and to which additional rings may be fused if desired;
or in which E⁺ and/or G⁺ defines an ammonium ion of the formula (Ia) 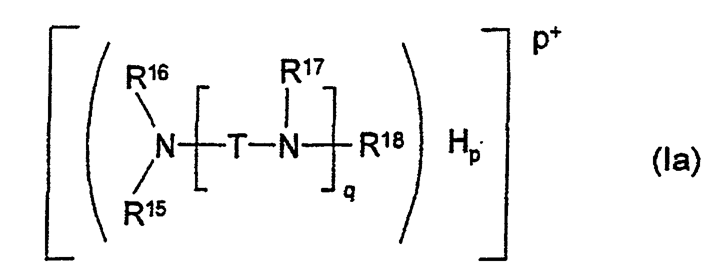 in which
R¹⁵, R¹⁶, R¹⁷ and R¹⁸ independently of one another are hydrogen or a (poly)alkyleneoxy group of the formula -[CH(R⁸⁰)-CH(R⁸⁰)O]ₖ-H, in which k is a number from 1 to 30 and the two radicals R⁸⁰ independently of one another are hydrogen, C₁-C₄-alkyl or, if k is > 1, a combination thereof;
q is a number from 1 to 10;
p is a number from 1 to 5, where p is ≤ q+1;
T is a branched or unbranched C₂-C₆-alkylene radical; or in which T, if q is > 1, may also be a combination of branched or unbranched C₂-C₆-alkylene radicals.

2. The pigment dispersant of claim 1, wherein s is a number from 1 to 3, n is a number from 0 to 2, and the sum of n and s is a number from 1 to 3.

3. The pigment dispersant of claim 1 or 2, wherein R¹ is a branched or unbranched C₁-C₁₀-alkylene group or a phenylene radical.

4. The pigment dispersant of one or more of claims 1 to 3, wherein R² is hydrogen or C₁-C₆-alkyl.

5. The pigment dispersant of one or more of claims 1 to 4, wherein E⁺ and G⁺ have the definition H⁺ or Na⁺, or, in the case of the equivalent M^{m+}/m, the metal cation M^{m+} has the definition Ca²⁺, Sr²⁺, Ba²⁺ or Al³⁺.

6. A process for preparing a pigment dispersant of one or more of claims 1 to 4, wherein an organic pigment from the group of the perinone, quinacridone, quinacridonequinone, anthanthrone, indanthrone, dioxazine, diketopyrrolopyrrole, indigo, thioindigo, thiazineindigo, isoindoline, isoindolinone, pyranthrone, isoviolanthrone, flavanthrone or anthrapyrimidine pigments is chlorosulfonated, the resulting sulfochloride is reacted with an aminocarboxylic acid of the formula (V) 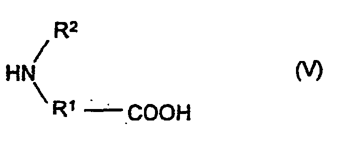 and if desired the free acid is reacted with an ammonium salt or metal salt based on G⁺ or E⁺.

7. A pigment preparation comprising
a) at least one organic base pigment and
b) at least one pigment dispersant of the formula (II) 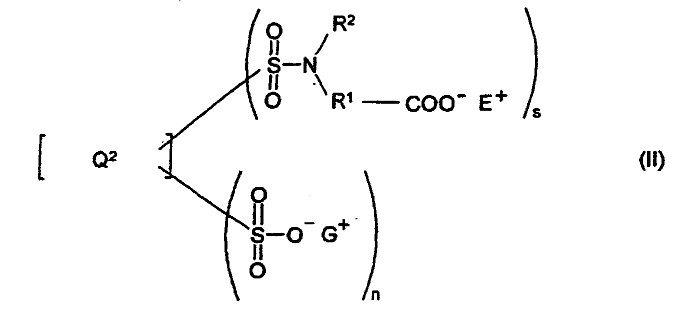
in which
Q² is a radical of an organic pigment from the group of the phthalocyanine, azo, benzimidazolone, disazo condensation, perinone, quinacridone, quinacridonequinone, anthanthrone, indanthrone, dioxazine, diketopyrrolopyrrole, indigo, thio-indigo, thiazineindigo, isoindoline, isoindolinone, pyranthrone, isoviolanthrone, flavanthrone or anthrapyrimidine pigments; and
s, n, R¹, R², E⁺ and G⁺ have the definitions stated in claims 1 to 5.

8. The pigment preparation of claim 7, wherein the pigment as per a) is a perylene, perinone, quinacridone, quinacridonequinone, anthraquinone, anthanthrone, benzimidazolone, disazo condensation, azo, indanthrone, phthalocyanine, triarylcarbonium, dioxazine, aminoanthraquinone, diketopyrrolopyrrole, indigo, thioindigo, thiazineindigo, isoindoline, isoindolinone, pyranthrone, isoviolanthrone, flavanthrone, anthrapyrimidine pigment or a pigment black; or is a mixed crystal or a mixture thereof.

9. The pigment preparation of claim 7 or 8, consisting essentially of
a) from 50 to 99.9% by weight of a least one organic pigment as per a),
b) from 0.1 to 25% by weight of at least one pigment dispersant of the formula (II),
c) from 0 to 25% by weight of auxiliaries,
the fractions of the respective components being based on the overall weight of the preparation (100% by weight).

10. A process for producing a pigment preparation of at least one of claims 7 to 9, wherein the pigment dispersant(s) as per b), the pigment(s) as per a), and, if used, component c) are mixed with one another or caused to act on one another during the preparation process of the pigment or pigment dispersant.

11. The use of a pigment preparation of one or more of claims 7 to 9 for pigmenting high molecular mass organic materials of natural or synthetic origin, especially plastics, resins, varnishes, paints, electrophotographic toners and developers, and also inks, including printing inks.

## Revendications

1. Agent dispersant pigmentaire de formule générale (I), 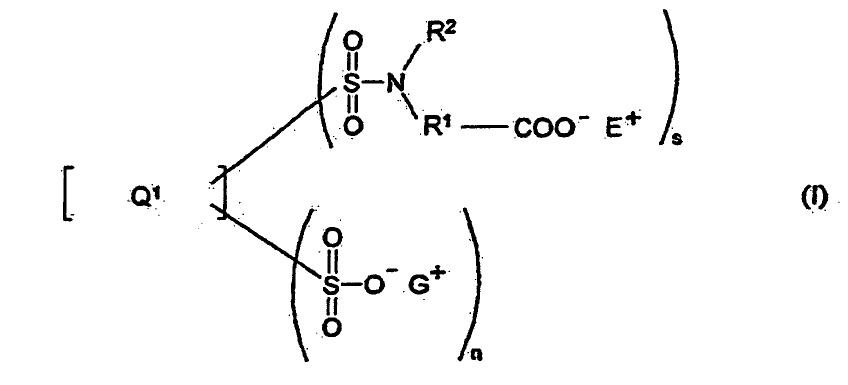 dans laquelle
Q¹ est un radical d'un pigment organique choisi dans le groupe des pigments périnone, quinacridone, quinacridonequinone, anthanthrone, indanthrone, dioxazine, dicétopyrrolopyrrole, indigo, thioindigo, thiazine-indigo, iso-indoline, isoindolinone, pyranthrone, iso-violanthrone, flavanthrone ou anthrapyrimidine ;
s représente un nombre de 1 à 5 ;
n représente un nombre de 0 à 4 ;
la somme de s et n s'élevant à entre 1 et 5 ;
R¹ représente un radical hydrocarboné aliphatique, bivalent, ramifié ou non ramifié, saturé ou insaturé, avec de 1 à 20 atomes de carbone, ou un radical cycloalkylène en C₅ à C₇, ou un radical aromatique bivalent avec 1, 2 ou 3 cycles aromatiques, dans lequel les cycles se présentent sous forme condensée ou peuvent être reliés par une liaison, ou un radical hétérocyclique avec 1, 2 ou 3 cycles, contenant 1, 2, 3 ou 4 hétéro-atomes du groupe O, N et S, ou une combinaison de ceux-ci ; les radicaux hydrocarbonés, cyclo-alkylène, aromatiques et hétéroaromatiques mentionnés pouvant être substitués par 1, 2, 3 ou 4 substituants choisis dans le groupe OH, CN, F, Cl, Br, NO₂, CF₃, alcoxy en C₁ à C₆, S-alkyle en C₁ à C₆, NHCONH₂, NHC(NH)NH₂, NHCO-alkyle en C₁ à C₆, alkyle en C₁ à C₆, COOR²⁰, CONR²⁰R²¹, NR²⁰R²¹, SO₃R²⁰, ou SO₂-NR²⁰R²¹, dans lesquels R²⁰ et R²¹ sont identiques ou différents et représentent un hydrogène, phényle ou alkyle en C₁ à C₆ ;
R² représente un hydrogène, HR¹ ou R¹-COO⁻E⁺ ;
E⁺ et G⁺ représentent, indépendamment l'un de l'autre, H⁺ ou l'équivalent M^{m+}/m d'un cation métallique M^{m+} du groupe principal 1. à 5. ou des groupes secondaires 1. ou 2. ou 4. à 8. de la Classification périodique des éléments chimiques, m étant un des nombres 1, 2 ou 3 ; un ion ammonium N⁺R⁹R¹⁰R¹¹R¹²,
dans lequel les substituants R⁹, R¹⁰, R¹¹ et R¹² représentent, indépendamment les uns des autres, respectivement un atome d'hydrogène, un alkyle en C₁ à C₃₀, alcényle en C₂ à C₃₀, cycloalkyle en C₅ à C₃₀, phényle, alkyle en C₁ à C₈-phényle, alkylène en C₁ à C₄-phényle ou un groupe (poly)alkylèneoxy de formule - [CH (R⁸⁰) -CH (R⁸⁰)-O]ₖ-H, dans lequel k est un nombre de 1 à 30 et les deux radicaux R⁸⁰ représentent indépendamment l'un de l'autre un hydrogène, alkyle en C₁ à C₄ ou, lorsque k est > 1, une combinaison d'entre eux ;
et dans lequel, lorsque R⁹, R¹⁰, R¹¹ et/ou R¹² sont un alkyle, alcényle, cycloalkyle, phényle ou alkyl-phényle, ils peuvent être substitués par un amino, hydroxy et/ou carboxy ; ou dans lequel les substituants R⁹ et R¹⁰ ensemble avec l'atome N quaternaire peuvent former un système cyclique saturé de cinq à sept chaînons, qui contient éventuellement encore d'autres hétéroatomes dans le groupe O, S et N ;
ou dans lequel les substituants R⁹, R¹⁰ et R¹¹ peuvent former ensemble avec l'atome N quaternaire un système cyclique aromatique à 5 à 7 chaînons, qui contient éventuellement encore d'autres hétéroatomes du groupe O, S et N et sont éventuellement fusionnés aux cycles additionnels ;
ou dans lesquels E⁺ et/ou G⁺ représentent un ion ammonium de formule (Ia), 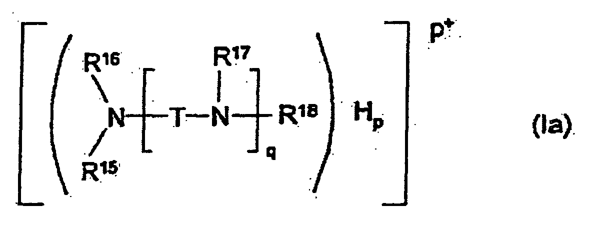 dans laquelle
R¹⁵, R¹⁶, R¹⁷ et R¹⁸ représentent, indépendamment les uns des autres, un hydrogène ou un groupe (poly)-oxyalkylène de formule - [CH(R⁸⁰)-CH(R⁸⁰)-O]ₖ-H, dans laquelle k est un nombre de 1 à 30 et les deux radicaux R⁸⁰ représentent indépendamment l'un de l'autre un hydrogène, alkyle en C₁ à C₄ ou, si k est > 1, une combinaison d'entre eux ;
q est un nombre de 1 à 10 ;
p est un nombre de 1 à 5, dans lequel p ≤ q + 1 ;
T représente un radical alkylène en C₂ à C₆ ramifié ou non ramifié ; ou dans lequel T, lorsque q > 1, peut aussi être une combinaison de radicaux alkylène en C₂ à C₆ ramifiés ou non ramifiés.

2. Agent dispersant pigmentaire selon la revendication 1, **caractérisé en ce que** s est un nombre de 1 à 3, n un nombre de 0 à 2,
et la somme de n et s est un nombre de 1 à 3.

3. Agent dispersant pigmentaire selon la revendication 1 ou 2, **caractérisé en ce que** R¹ représente un groupe alkylène en C₁ à C₁₀ ramifié ou non ramifié ou un radical phénylène.

4. Agent dispersant pigmentaire selon une ou plusieurs des revendications 1 à 3, **caractérisé en ce que** R² représente un hydrogène ou alkyle en C₁ à C₆.

5. Agent dispersant pigmentaire selon une ou plusieurs des revendications 1 à 4, **caractérisé en ce que** E⁺ et G⁺ ont la signification H⁺ ou Na⁺, ou dans lequel, dans le cas de l'équivalent M^{m+}/m le cation métallique M^{m+} a la signification Ca²⁺, Sr²⁺, Ba²⁺ ou Al³⁺.

6. Procédé pour la préparation d'un agent dispersant pigmentaire selon une ou plusieurs des revendications 1 à 4, **caractérisé en ce que** l'on chlorosulfone un pigment organique choisi dans le groupe des pigments périnone, quinacridone, quinacridonequinone, anthanthrone, indanthrone, dioxazine, dicétopyrrolo-pyrrole, indigo, thioindigo, thiazine-indigo, isoindoline, isoindolinone, pyranthrone, isoviolanthrone, flavanthrone ou anthrapyrimidine, l'on met à réagir le sulfochlorure produit avec un acide aminocarboxylique de formule (V), 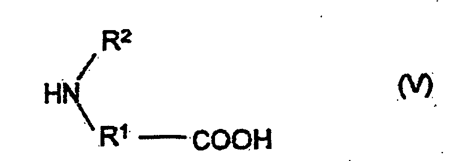 et l'on met à réagir éventuellement l'acide libre avec un sel métallique à base de G⁺ ou E⁺ ou un sel d'ammonium.

7. Préparation pigmentaire, **caractérisée par** une teneur en
a) au moins un pigment organique et
b) au moins un agent dispersant pigmentaire dé formule (II), 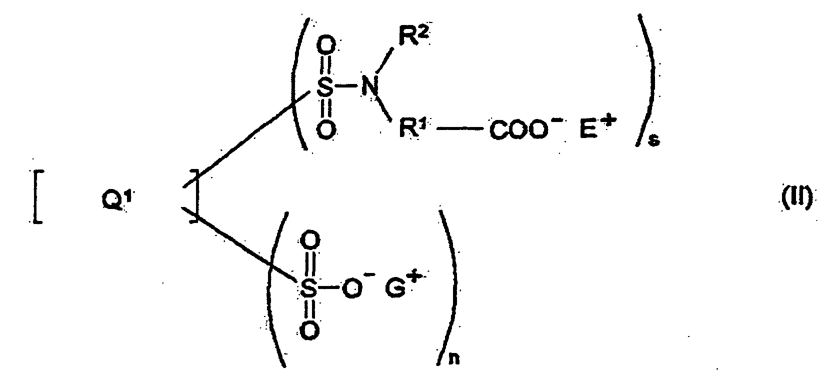
dans laquelle
Q² est un radical d'un pigment organique du groupe des pigments phtalocyanine, azoïque, benzimidazolone, de condensation disazoïque, périnone, quinacridone, quinacridonequinone, anthanthrone, indanthrone, dioxazine, dicétopyrrolopyrrole, indigo, thioindigo, thiazine-indigo, isoindoline, isoindolinone, pyranthrone, isoviolanthrone, flavanthrone ou anthrapyrimidine ; et
s, n, R¹, R², E⁺ et G⁺ ont les significations indiquées dans les revendications 1 à 5.

8. Préparation pigmentaire selon la revendication 7, **caractérisée en ce que** le pigment selon a) est un pigment périlène, périnone, quinacridone, quinacridonequinone, anthraquinone, anthanthrone, benzimidazolone, de condensation disazoïque, azoïque, indanthrone, phtalocyanine, triarylcarbonium, dioxazine, aminoanthraquinone, dicétopyrrolopyrrole, indigo, thioindigo, thiazine-indigo, isoindoline, isoindolinone, pyranthrone, isoviolanthrone, flavanthrone, anthrapyrimidine ou un noir de carbone pigmentaire ; ou une solution solide ou un mélange d'entre eux.

9. Préparation pigmentaire selon la revendication 7 ou 8, constituée essentiellement de
a) 50 à 99,9 % en poids d'au moins un pigment organique selon a),
b) 0,1 à 25 % en poids d'au moins un agent dispersant pigmentaire de formule (II),
c) 0 à 25 % en poids d'adjuvants, les proportions des composants respectifs étant rapportées au poids total de la préparation (100 % en poids).

10. Procédé pour la fabrication d'une préparation pigmentaire selon au moins l'une des revendications 7 à 9, **caractérisé en ce que** l'on mélange entre eux le ou les agents dispersants pigmentaires selon b), le ou les pigments selon a) et éventuellement le composant c) ou on les laisse réagir entre eux pendant le procédé de fabrication du pigment ou de l'agent dispersant pigmentaire.

11. Utilisation d'une préparation pigmentaire selon une ou plusieurs des revendications 7 à 9 pour la pigmentation de matériaux organiques de masse moléculaire élevée d'origine naturelle ou synthétique, en particulier de matières synthétiques, de résines, de laques, de peintures, de toners et de révélateurs électrophotographiques, ainsi que d'encres et de colorants d'impression.
